# EUROPEAN PATENT APPLICATION

(11) **EP 1 752 461 A2**
(43) Date of publication of application: **14.02.2007**
(21) Application number: 06115989.3
(22) Date of filing: 23.06.2006
(51) Int. Cl.: C07F 7/02

(54) **Positive electrified charge control agent and charge control method of toner using it**

(30) Priority: 27.06.2005 JP 2005186075
(71) Applicant: ORIENT CHEMICAL INDUSTRIES, LTD., Osaka-shi, Osaka 535-0022 (JP)
(72) Inventor: Yamate, Osamu, Neyagawa-shi Osaka 572-8581 (JP); Yasumatsu, Masashi, Neyagawa-shi Osaka 572-8581 (JP)
(74) Representative: Jönsson, Hans-Peter

(57) **Abstract**

A positive electrified charge control agent comprises a silicon complex compound represented by the following chemical formula (1) 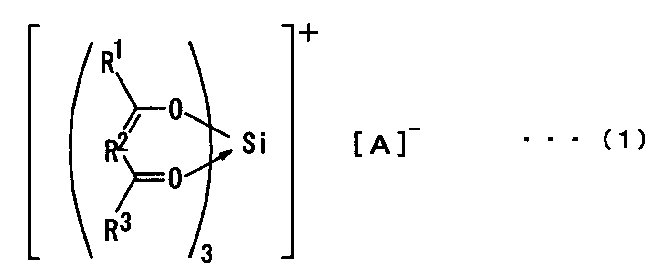 (in the formula (1), [A]⁻ is a sulfate anion). A positive electrified toner for developing an electrostatic image comprises the positive electrified charge control agent. A charge control method of the positive electrified toner for developing the electrostatic image comprises a step for making the toner positively electrified by friction.

## Description

This invention relates to a positive electrified charge control agent which is used for a toner for developing an electrostatic image or a powder paint, a positive electrified toner for developing an electrostatic image including the agent, a charge-giving composition including the agent, a component which is made of the composition and gives the charge to the toner, and a charge control method of the toner.

Electro photography applied to a copy machine, printer or facsimile performs to develop an electrostatic latent image on a photosensitive frame with toner having frictional electrification and then the imaged toner is transferred and fixed to copy or print onto paper.

A toner can be classified into a binary component toner and a unary component toner. In a developing method using the binary component toner, a developer that the toner and a carrier of magnetic particles for giving the charge thereto are mixed is used, for example. The toner is electrified by friction between the toner and the carrier, and transferred to a photosensitive frame with the carrier, and then adhered thereto electrostatically to develop. In a developing method using the unary component toner, after the toner is electrified by friction in a space between the metallic blade and the developing sleeve, the toner is flown to a photosensitive frame by latent electric field to develop, for example.

The electrification property of such toner is an important factor to raise a development speed of electro photography and form a vivid image. Therefore, a charge control agent is added to the toner with a resin for the toner so as to control a proper quantity of the electrification stably and quicken a rise speed of the electrification. The charge control agent is for positive or negative electrification. For instance, as the positive electrified charge control agent, it is disclosed in Japanese Patent Provisional Publication Nos. 63-206768 and 62-62369. As the negative electrified charge control agent, it is disclosed in Japanese Patent Provisional Publication No. 3-276166. The charge control agents disclosed in those publications are organic metal complex compounds which organic ligands are coordinated to a central atom of metal such as aluminum, tin, lead, cobalt, iron, nickel, zinc, chromium, copper, barium, and beryllium. While the charge control agent for negative electrification disclosed in Japanese Patent Provisional Publication No. 4-293057 is compound which organic ligand is coordinated to a central atom of silicon. Therefore, the toner including this charge control agent for negative electrification is a negative electrified toner. The toner is used for developing a positive electrified electrostatic latent image on a photosensitive frame.

It is required that the toner has more excellent electrification property and stability than prior toner has to achieve high speed and high definition in copying and printing. Furthermore, it is required that the toner and the charge control agent included thereto have preservation stability and excellent environmental safety on the latest trend.

Moreover, it is required that the charge control agent is able to be used of a powder paint for a electrostatic powder paint method which attracts and bakes the electrified powder paint onto a surface of a structural work having charge, and has the proper electrification property and stability.

In case of frictional electrification, the toner to which such charge control agent is added may cause pollution of the carrier, insufficient electrification property, low concentration of images, or poor quality of images by fogginess because the exposed charge control agent on the surface sometimes falls due to friction between toner particulars, collision with the carrier, or friction between the photosensitive frames.

As an alternative method for the method for electrifying the toner by adding the charge control agent, a charge-giving component is disclosed in Japanese Patent Provisional Publication No. 2004-341456. In the component, the charge control agent for contacting with and electrifying the toner is exposed on the carrier in order to give the required charge for developing to the toner.

In order to achieve high speed and high definition in copying and printing, the charge giving component which gives sufficient charge to the toner, has more excellent electrification property and stability than a prior toner has, and has excellent environmental safety and preservation stability, is required.

The present invention has been developed to solve the foregoing problems. It is an object of the present invention to provide a charge control agent which causes excellent positive electrification property of a toner for developing an electrostatic image and a powder paint, and a positive electrified toner for developing an electrostatic image which includes the agent, has excellent electrification stability, preservation stability, environmental resistance and makes high definition of the developed image. It is another object of the present invention to provide a charge control method using the toner.

Moreover, it is an object of the present invention to provide a charge-giving composition for a raw material of a charge-giving component which gives negative charge to the toner for the electrostatic photography and causes excellent electrification property and electrification stability. It is another object of the present invention to provide a charge-giving component which is made of the charge-giving composition and has sufficient charge-giving ability, intensity of frictional resistance, durability, and environmental stability. It is another object of the present invention to provide a charge control method of a toner for an electrostatic photography using the charge-giving component.

The positive electrified charge control agent of the present invention developed for accomplishing the foregoing objects, comprises a silicon complex compound represented by the following chemical formula (1) 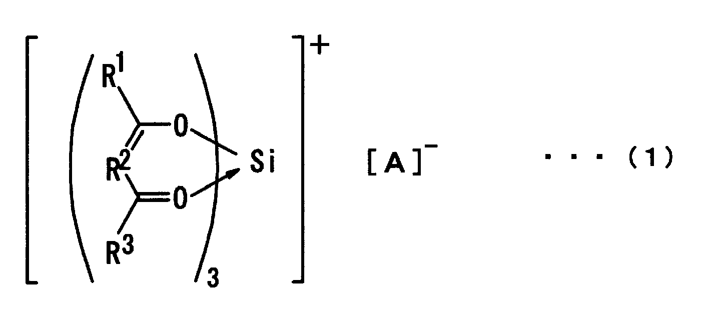 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion).

In the positive electrified charge control agent, the silicon complex compound is preferably represented by the following chemical formula (2) 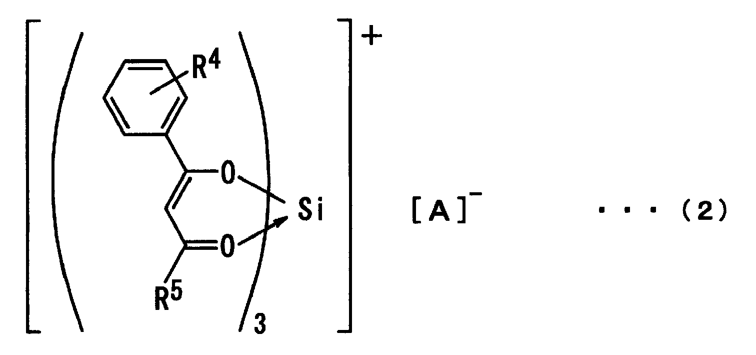 (in the formula (2), R⁴ has 1 to 8 carbons and is an alkyl group, an alkenyl group or an alkoxyl group; R⁵ has 1 to 8 carbons and is an alkyl group or an alkenyl group, or an aryl group having no substitutional group or having substitutional groups illustrated with an alkyl group having 1 to 8 carbons, an alkenyl group having 1 to 8 carbons and an alkoxyl group having 1 to 8 carbons; [A]⁻ is the same above).

In the formula (2), it is preferable that R⁴ is an alkyl group having 1 to 8 carbons; R⁵ is an isopropyl group, a tert-butyl group, an isobutyl group, a tert-octyl group or an aryl group having no substitutional group or having substitutional groups illustrated with an alkyl group having 1 to 8 carbons and an alkoxyl group having 1 to 8 carbons.

It is preferable that the silicon complex compound represented by the chemical formula (2) is a compound obtained by a reaction of a sulfate anion type organic compound with a beta-diketone silicon compound represented by the following chemical formula (3) 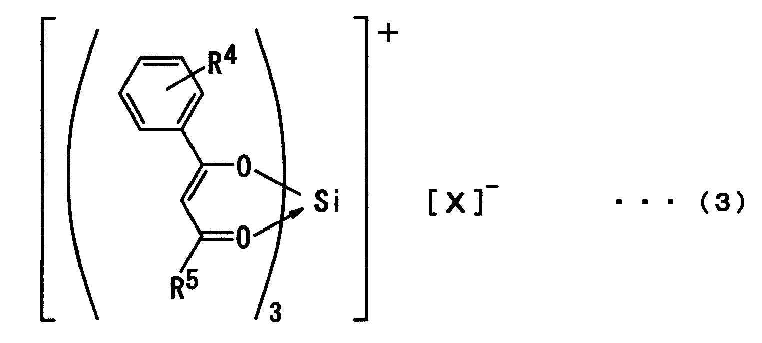 (in the formula (3), R⁴ and R⁵ are the same above, X is a halogen atom).

The content of allowable residual halogen derived from beta-diketone silicon compound represented by the chemical formula (3) is preferably at most 0.2%.

As the sulfate anion type organic compound, an alkyl sulfate or a salt thereof, a poly(oxyethylene) alkyl ether sulfate or a salt thereof, or a poly(oxyethylene) alkyl phenyl ether sulfate or a salt thereof are mentioned, for example.

It is preferable that the alkyl sulfate, the poly(oxyethylene) alkyl ether sulfate and the poly(oxyethylene) alkyl phenyl ether sulfate have a straight- or a branch-chain alkyl group having 8 to 18 carbons.

A positive electrified toner for developing an electrostatic image of the present invention developed for accomplishing the foregoing objects, comprises the above-mentioned positive electrified charge control agent.

The positive electrified toner for developing an electrostatic image comprises 0.1 to 10 parts by weight of the positive electrified charge control agent and 100 parts by weight of a resin for the toner.

A charge control method of the positive electrified toner for developing the electrostatic image of the present invention developed for accomplishing the foregoing objects, comprises a step for making the above-mentioned toner positively electrified by friction.

A charge-giving composition of the present invention developed for accomplishing the foregoing objects, comprises the above-mentioned positive electrified charge control agent, and a solvent and/or a dispersant.

A charge-giving component of the present invention developed for accomplishing the foregoing objects, comprises at least one selected from a carrier powder, a developing sleeve and a blade which give a charge by contacting to the toner for the electrostatic photography, wherein at least one thereof is coated with or formed by the above-mentioned charge-giving composition, and the exposed silicon complex compound.

A charge control method of a toner for an electrostatic photography of the present invention developed for accomplishing the foregoing objects, comprises a step for making the toner electrified by contact and friction between the toner for the electrostatic photography and the above-mentioned charge-giving component.

In addition, the structural formula of the chemical formulae (1) and (2) may be represented by the following chemical formulae (4) or (5).

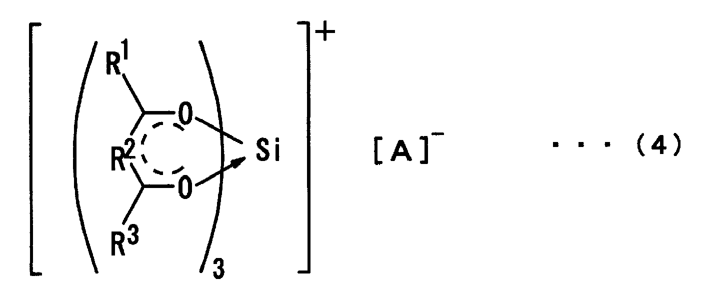

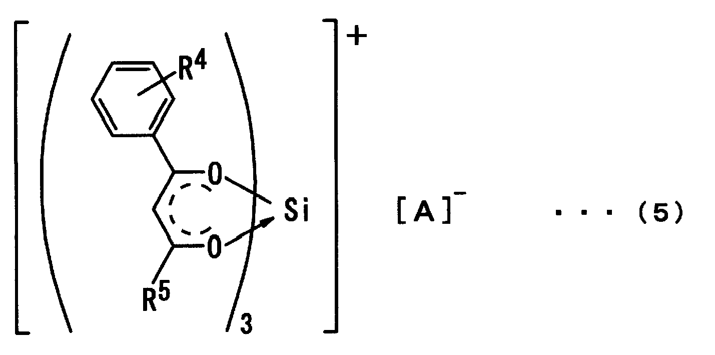

The positive electrified charge control agent of the present invention is a salt obtained by a reaction of a sulfate anion type organic compound with a beta-diketone silicon compound which has a positive charge control property. Therefore, the positive electrified charge control agent accomplishes excellent positive electrification property of the toner for developing the electrostatic image and the powder paint.

The positive electrified toner for developing an electrostatic image comprising the charge control agent has an excellent electrification stability, an excellent preservation stability and an excellent environmental resistance. The image developed using the electrified toner has an excellent quality. Furthermore, the toner has little change of the amount of electrification of the toner under environmental change or hard environment of from high temperature and high humidity to low temperature and low humidity because of comprising the positive electrified charge control agent. Therefore, the toner has an excellent environmental stability.

The charge-giving composition comprising the positive electrified charge control agent of the present invention gives negative charge to the toner for the electrostatic photography and generates excellent electrification property and electrification stability. The charge-giving composition has especially excellent heat resistance, preservation stability, and environmental safety.

The charge-giving component formed by being coated with the charge-giving composition or being molded from the charge-giving composition gives the charge to the toner at quick rise speed of the electrification.

The charge-giving component is used for giving the charge to not only monochrome toner but also various chromatic color toners extensively. The charge-giving component has excellent durability, so it can be used continuously for a long period of time without an exchange.

The charge control method of the toner for the electrostatic photography using the charge-giving component is suitable to develop the electrostatic image on the photosensitive frame made from any matter of regardless of organic or inorganic type. Furthermore, it is suitable to develop on not only a regular paper but also a processing paper and a processing film. The developed toner image has a fixing ability with an extensive range of temperature. The fixed images are vivid and no fogginess to back ground, and has non-offset property and no degradation for a long time.

According to the charge control method of the toner for the electrostatic photography, it is unnecessary that the toner comprises the charge control agent, so the charge-giving components such as the carrier powder, the developing sleeve, the metallic blade and the magnetic blade are not polluted.

Fig. 1 is a figure showing a measurement result by a liquid chromatography mass spectrometric analysis of an intermediate of a silicon complex compound comprised in a positive electrified charge control agent applying the present invention.

Fig. 2 is a figure showing a measurement result by a liquid chromatography mass spectrometric analysis of a silicon complex compound comprised in a positive electrified charge control agent applying the present invention.

Hereunder, embodiments of the present invention are explained in detail. However, the invention is not limited to these embodiments.

The positive electrified charge control agent of the present invention comprises one or more silicon complex compounds represented by the chemical formula (1) as an effective component.

In the chemical formula (1), R¹ and R³ are same or different to each other. Examples of R¹ and R³ are a hydrogen atom; a hydroxyl group; a hydroxyalkyl group; a carboxyl group; an alkoxycarbonyl group; a formyl group; a halogen atom such as Cl, Br, I, F; an alkyl group having 1 to 18 carbons such as methyl group, ethyl group, n-propyl group, isopropyl group, n-butyl group, isobutyl group, sec-butyl group, tert-butyl group and tert-octyl group; an alkoxyl group having 1 to 18 carbons such as methoxyl group, ethoxyl group, isopropoxyl group, butoxyl group, pentyloxyl group and hexyloxyl group; an acyl group such as acetyl group, propionyl group, butyryl group and benzoyl group; an alkenyl group such as vinyl group, allyl group(-CH₂CH=CH₂) and -C(CH₃)=CH₂; a nitro group; a cyano group; an amino group; an alicyclic group being to have substitutional groups such as cycloalkyl group having 3 to 7 carbons illustrated with cyclopropenyl group, cyclobutyl group, cyclohexyl group and cycloheptyl group; an aralkyl group being to have substitutional groups such as benzyl group and alpha,alpha'-dimethylbenzyl group; an aryl group being to have substitutional groups illustrated with a halogen atom of Cl, Br, I, F, or an alkyl group having 1 to 18 carbons, such as phenyl group, tolyl group and naphthyl group. Examples of R² are a nitrogen atom or a carbon atom being to have substitutional groups. Example of [A]⁻ is a sulfate anion obtained from a sulfate anion type organic compound.

It is much preferable that the silicon complex compound is a compound represented by the chemical formula (2) in order to adjust a suitable melting point required to be used for the positive electrified charge control agent or the toner, or to adjust solubility into the excellent resin for toner.

In the chemical formula (2), examples of R⁴ are an alkyl group having 1 to 8 carbons such as methyl group, ethyl group, propyl group, isopropyl group, butyl group, tert-butyl group, pentyl group, hexyl group, octyl group and tert-octyl group; an alkenyl group having 2 to 8 carbons such as vinyl group, allyl group(-CH₂CH=CH₂) and - C(CH₃)=CH₂; or an alkoxyl group having 1 to 8 carbons such as methoxyl group, ethoxyl group, isopropoxyl group, butoxyl group, pentyloxyl group and hexyloxyl group. Examples of R⁵ are an alkyl group having 1 to 8 carbons such as methyl group, ethyl group, propyl group, isopropyl group, butyl group, tert-butyl group, pentyl group, hexyl group, octyl group, tert-octyl group; an alkenyl group having 2 to 8 carbons such as vinyl group, allyl group(-CH₂CH=CH₂) and - C(CH₃)=CH₂; or an aryl group being to have no substitutional group or being to have substitutional group illustrated with an alkyl group having 1 to 8 carbons, an alkenyl group having 1 to 8 carbons and an alkoxyl group having 1 to 8 carbons, such as phenyl group, tolyl group and naphthyl group. [A]⁻ is the same above.

In the chemical formula (2), it is preferable that R⁴ is an alkyl group having 1 to 8 carbons, and it is much preferable that R⁴ is isopropyl group, tert-butyl group and tert-octyl group. It is preferable that R⁵ is isopropyl group, tert-butyl group, isobutyl group, tert-octyl group, or an aryl group having no substitutional group or having substitutional groups illustrated with an alkyl group having 1 to 8 carbons, and an alkoxyl group having 1 to 8 carbons.

As the sulfate anion type organic compound used for forming [A]⁻ in the chemical formula (1) or (2), an alkyl sulfate or a salt thereof, a secondary higher alcohol sulfate or a salt thereof, an olefin sulfate or a salt thereof, a fatty acid ethylene glycolide sulfate or a salt thereof, a poly(oxyethylene) alkyl ether sulfate or a salt thereof, a poly(oxyethylene) alkyl phenyl ether sulfate or a salt thereof, a fatty acid monoglyceride sulfate or a salt thereof, a fatty acid multivalent alcohol sulfate or a salt thereof, a sulfated oil, a fatty acid alkyl sulfate or a salt thereof, a fatty acid amide sulfate or a salt thereof, a fatty acid anilide sulfate or a salt thereof, or a fatty acid monoalkanolamide sulfate or a salt thereof, are preferable.

It is especially preferable that the sulfate anion type organic compound is an alkyl sulfate or a salt thereof; a poly(oxyethylene) alkyl ether sulfate or a salt thereof with 2 to 12 repeated number of repeating unit; or a poly(oxyethylene) alkyl phenyl ether sulfate or a salt thereof.

The alkyl sulfate or a salt thereof is represented by a chemical formula (a) for example

R⁶-O-SO₃-M¹ (a)

(in the chemical formula (a), R⁶ is an alkyl group, preferably an alkyl group having 8 to 18 carbons, especially preferably a dodecyl group having 12 carbons. M¹ is H; an alkaline metal such as Na and K; an alkaline earth metal such as Ca; NH₄; an alkanolamine or an alkanolammonium).

The poly(oxyethylene) alkyl ether sulfate or a salt thereof is represented by a chemical formula (b) for example

R⁷-O-(CH₂CH₂O)ₙ₁-SO₃-M² (b)

(in the chemical formula (b), R⁷ is an alkyl group, preferably an alkyl group having 8 to 18 carbons, especially preferably a dodecyl group having 12 carbons. n1 is 2 or more number. M² is H; an alkaline metal such as Na and K; an alkaline earth metal such as Ca; NH₄; an alkanolamine or an alkanolammonium).

The poly(oxyethylene) alkyl phenyl ether sulfate or a salt thereof is represented by a chemical formula (c) for example 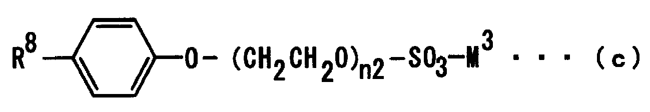 (in the chemical formula (c), R⁸ is an alkyl group, preferably an alkyl group having 8 to 18 carbons, especially preferably a dodecyl group having 12 carbons. n2 is 2 or more number. M³ is H; an alkaline metal such as Na and K; an alkaline earth metal such as Ca; NH₄; an alkanolamine or an alkanolammonium).

The positive electrified charge control agent is prepared by comprising the silicon complex compound represented by the chemical formula (1), which is obtained by forming a salt between the silicon complex cation and the sulfate anion, as an effective component. Concretely, it is prepared through the following steps.

As the first step, a silicification agent such as tetraethoxysilane or a silicon halide illustrated with silicon tetrachloride is allowed to be reacted with a compound having hydroxyl group and carbonyl group represented by the following chemical formula (6) 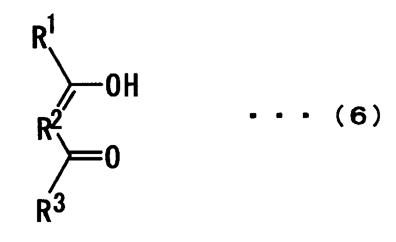 (in the chemical formula (6), R¹, R² and R³ are the same as the chemical formula (1)). The oxygen derived from the hydroxyl group is combined with the central silicon atom derived from the silicification agent by the covalent bond, and the carbonyl group is combined with the central silicon atom derived from the silicification agent by the coordination bond. Then, a silicon complex intermediate represented by the following chemical formula (7) is obtained. 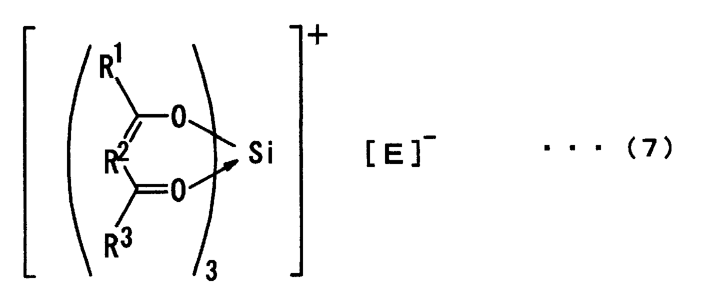 (in the chemical formula (7), R¹, R² and R³ are the same as the chemical formula (1), [E]⁻ is anion). [E]⁻ is an anion derived from the silicification agent generally.

It is preferable that the silicon halide such as a silicon tetrachloride is used as the silicification agent in order to obtain the silicon complex intermediate with high yield and high purity. For example, if the silicon tetrachloride is reacted with the compound represented by the chemical formula (6), [E]⁻ is a halogen anion [X]⁻, as shown in the following chemical equation (8).

As the following second step, the silicon complex intermediate is reacted with D-O-SO₃-M⁴ of a sulfate anion type compound, and [E]⁻ such as [X]⁻ is ion-changed into [D-O-SO₃]⁻ of the sulfate anion as [A]⁻, to obtain the silicon complex compound represented by the chemical formula (1), as shown in the following chemical equation (8) 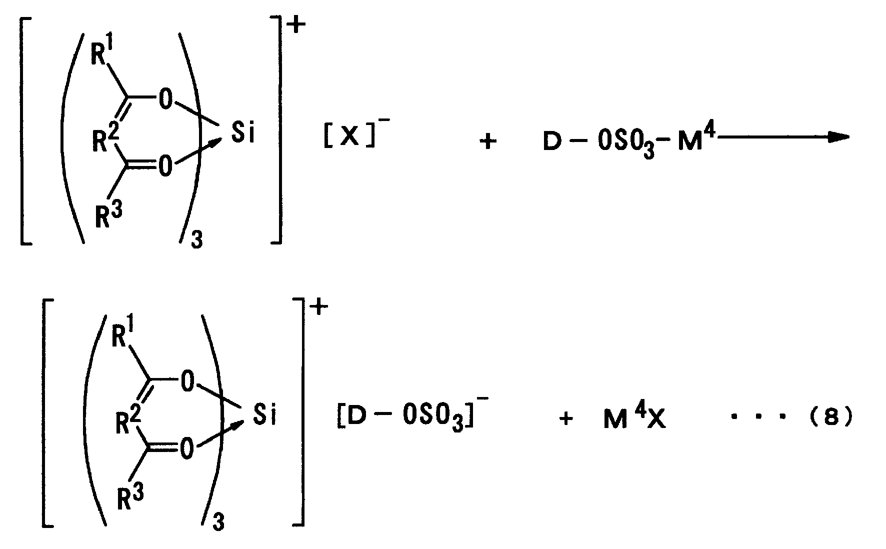 (in the chemical equation (8), R¹, R², R³ and [A]⁻ are the same as the chemical formula (1), [X]⁻ is a halogen anion, D-O-SO₃-M⁴ is a sulfate anion type organic compound).

The important feature of the present invention is that a counter ion in a silicon complex compound is a sulfate anion. The positive electrified charge control agent comprising the silicon complex compound of the present invention has a predominant effect of improving an electrification property, especially environmental stability, as compared with a charge control agent whose counter ion is an anion other than a sulfate anion, for example a sulfonic acid type anion, not applying the present invention.

In addition, it is an important factor for improving the electrification property of the positive electrified charge control agent that a content of allowable residual halogen is 0.2% or less, preferably 0.1% or less when the ion-changing reaction is performed. The electrification property, the preservation stability and the environmental resistance thereof improve more resulting from a preferable embodiment that there are few contents of allowable residual halogen.

As the preferable embodiment of the present invention, an example that a diketone silicon complex intermediate whose counter ion is [X]⁻ of a halogen anion is ion-changed to a diketone silicon complex compound whose counter ion is [A]⁻ of a sulfate anion, is mentioned, as shown in the following chemical equation (9).

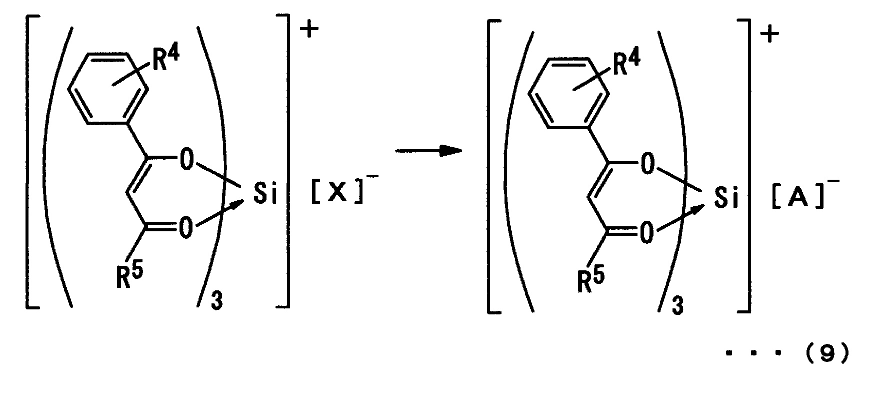

The charge control agent of the present invention has electric conductivity preferably ranging 300 micro S at the maximum, much preferably ranging 200 micro S at the maximum. The electrification property of the charge control agent improves as the electric conductivity lowers.

The electric conductivity was determined as follows. 2 g of the compound was added to 100ml of pure water. It was boiled for 5 minutes, and then an amount of water that corresponds to evaporated water was added. It was cooled until room temperature, and filtrated. The electric conductivity was determined by conductometry of the filtrate.

As concrete examples of silicon complex compounds used for the positive electrified charge control agent, beta-diketone silicon compounds having the positive charge control property are shown below. However, the present invention is certainly not limited to these examples. 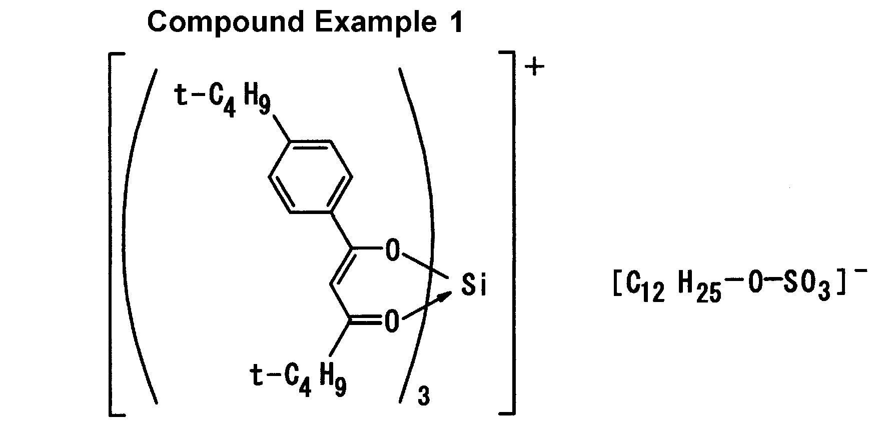 (t-C₄H₉ is a tertiary butyl group.) 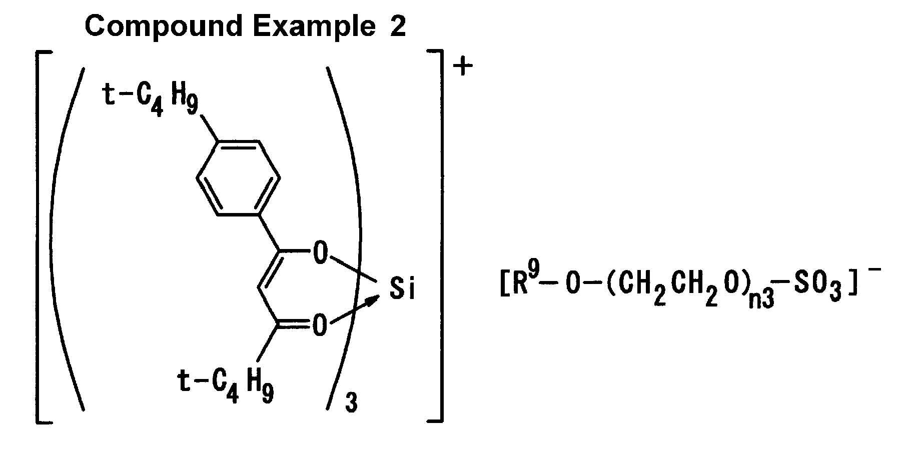 (t-C₄H₉ is a tertiary butyl group, n3 is 2 or more number, R⁹ is a group having a main component of C₁₂H₂₅.) 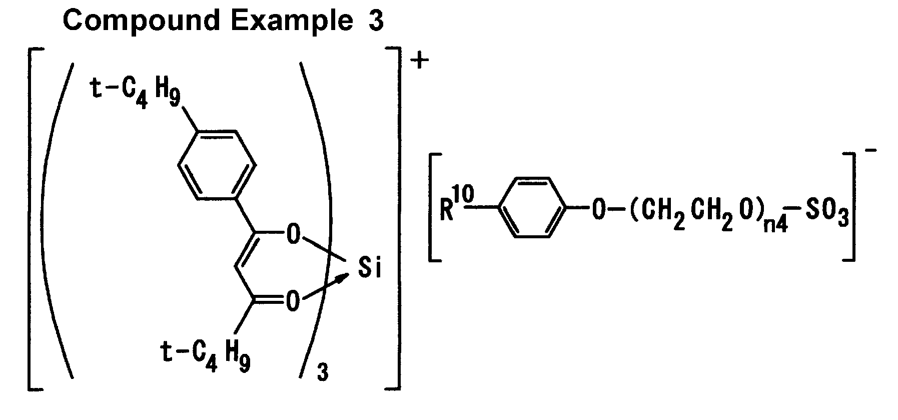 (t-C₄H₉ is a tertiary butyl group, n4 is 2 or more number, R¹⁰ is a group having a main component of C₉H₁₉.) 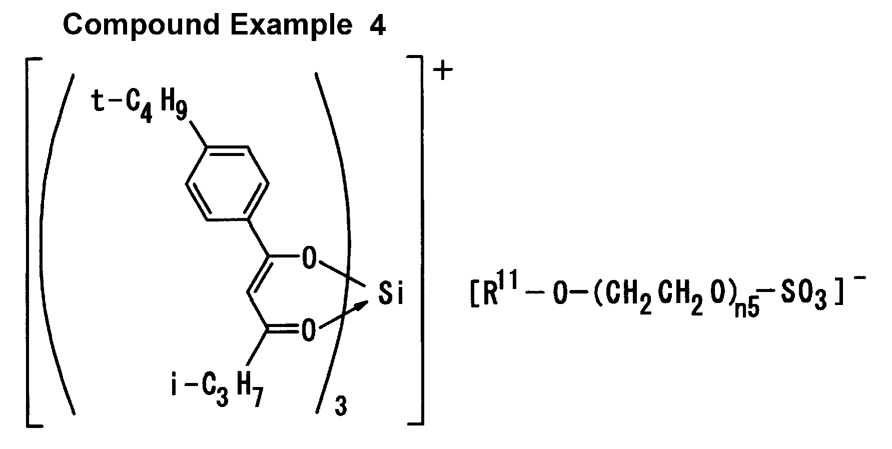 (t-C₄H₉ is a tertiary butyl group, i-C₃H₇ is an isopropyl group, n5 is 2 or more number, R¹¹ is a group having a main component of C₁₂H₂₅.) 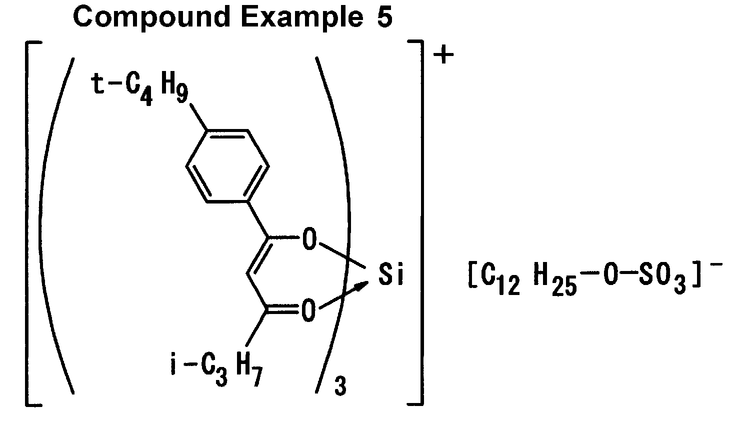 (t-C₄H₉ is a tertiary butyl group, i-C₃H₇ is an isopropyl group.) 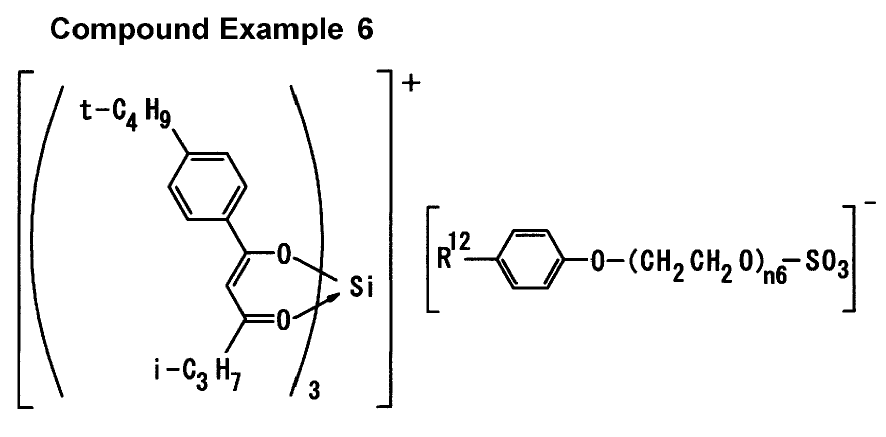 (t-C₄H₉ is a tertiary butyl group, i-C₃H₇ is an isopropyl group, n6 is 2 or more number, R¹² is a group having a main component of C₉H₁₉.) 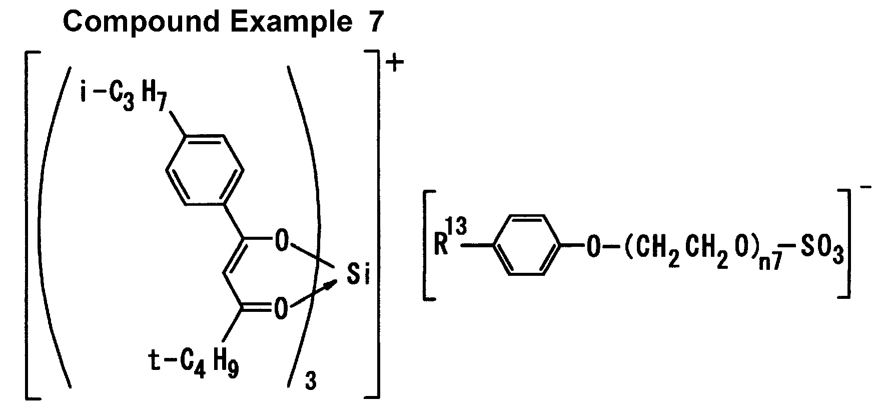 (i-C₃H₇ is an isopropyl group, t-C₄H₉ is a tertiary butyl group, n7 is 2 or more number, R¹³ is a group having a main component of C₉H₁₉.) 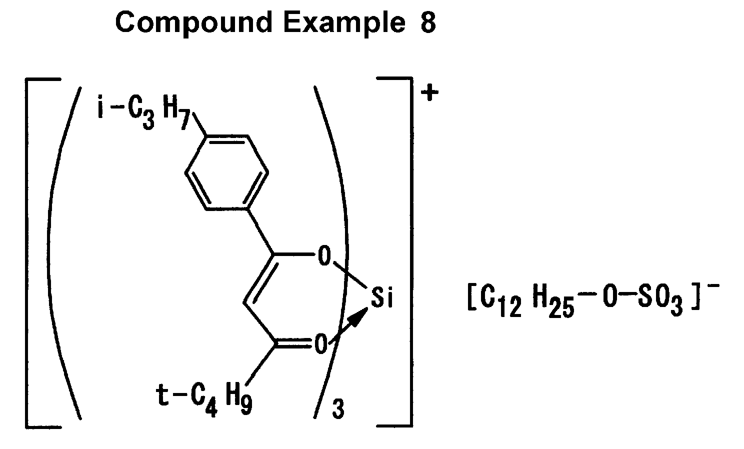 (i-C₃H₇ is an isopropyl group, t-C₄H₉ is a tertiary butyl group.) 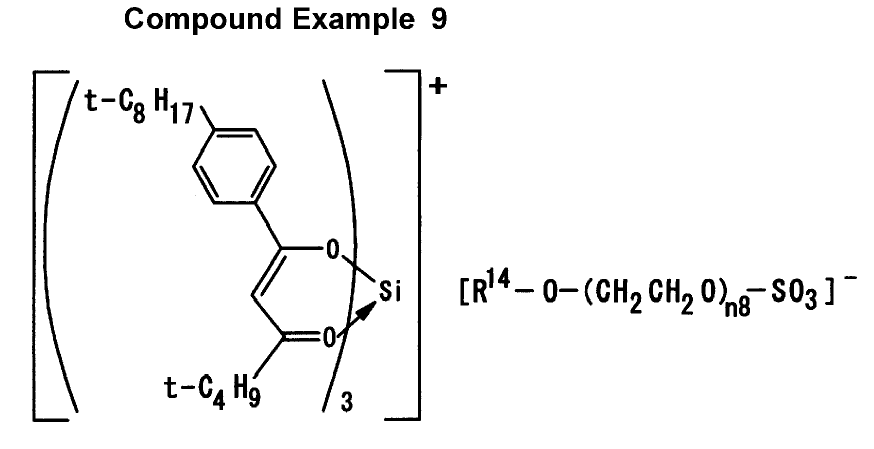 (t-C₈H₁₇ is a tertiary octyl group, t-C₄H₉ is a tertiary butyl group, n8 is 2 or more number, R¹⁴ is a group having a main component Of C₁₂H₂₅.) 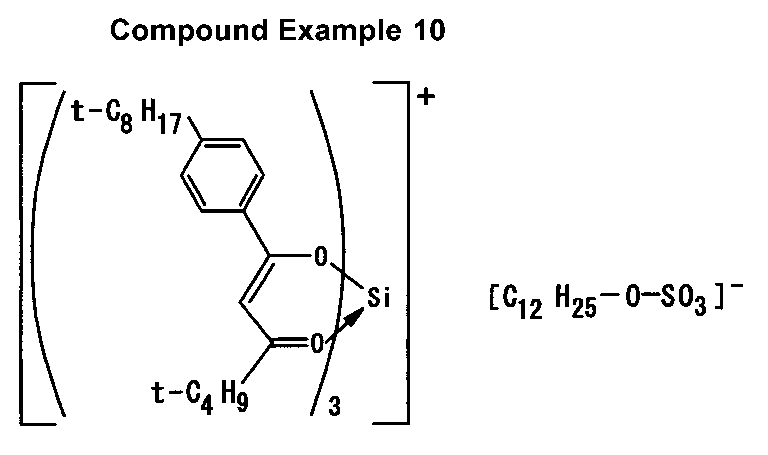 (t-C₈H₁₇ is a tertiary octyl group, t-C₄H₉ is a tertiary butyl group.) 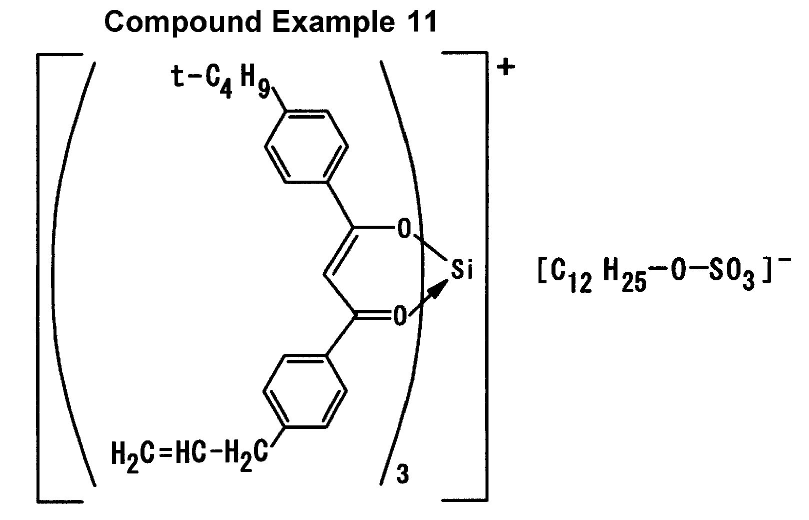 (t-C₄H₉ is a tertiary butyl group.) 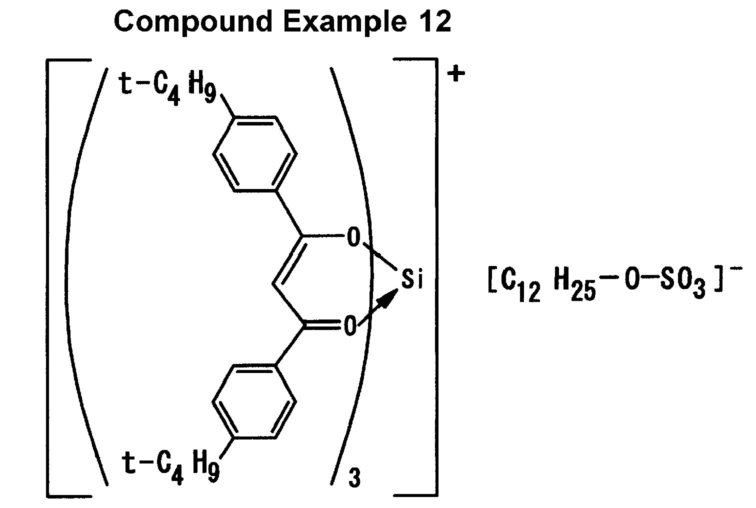 (t-C₄H₉ is a tertiary butyl group.) 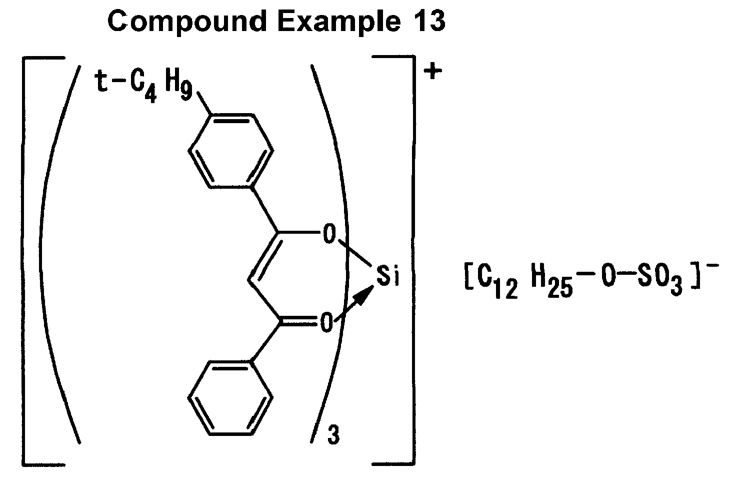 (t-C₄H₉ is a tertiary butyl group.) 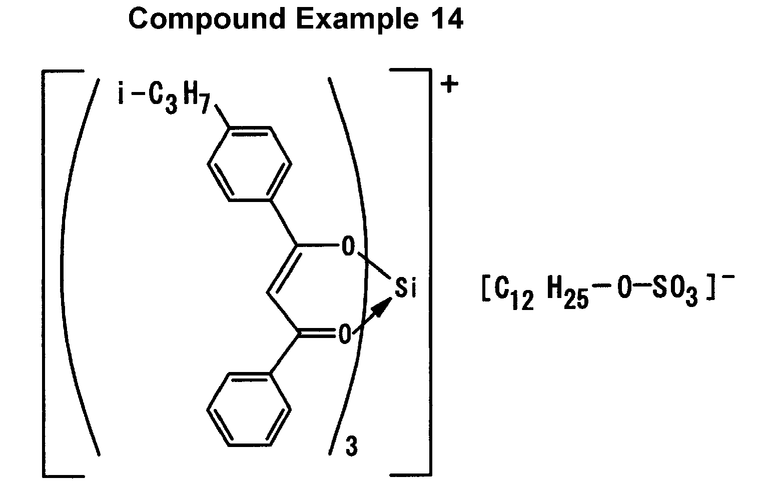 (i-C₃H₇ is an isopropyl group.) 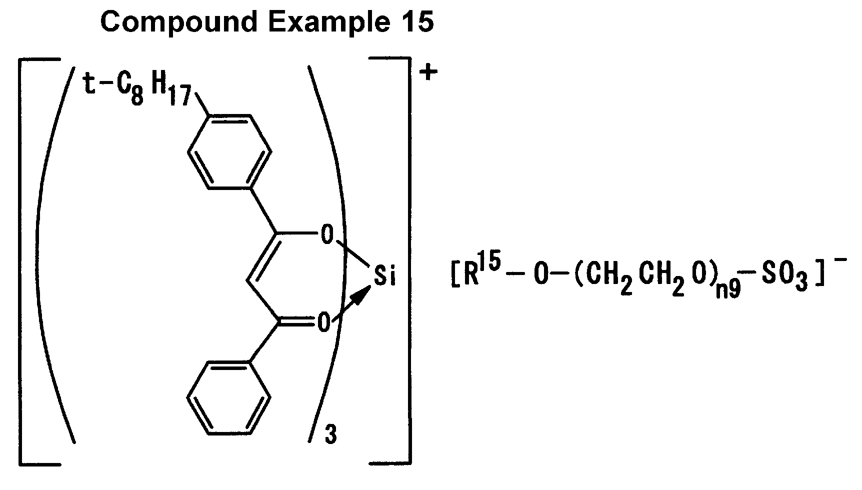 (t-C₈H₁₇ is a tertiary octyl group, n9 is 2 or more number, R¹⁵ is a group having a main component of C₁₂H₂₅.) 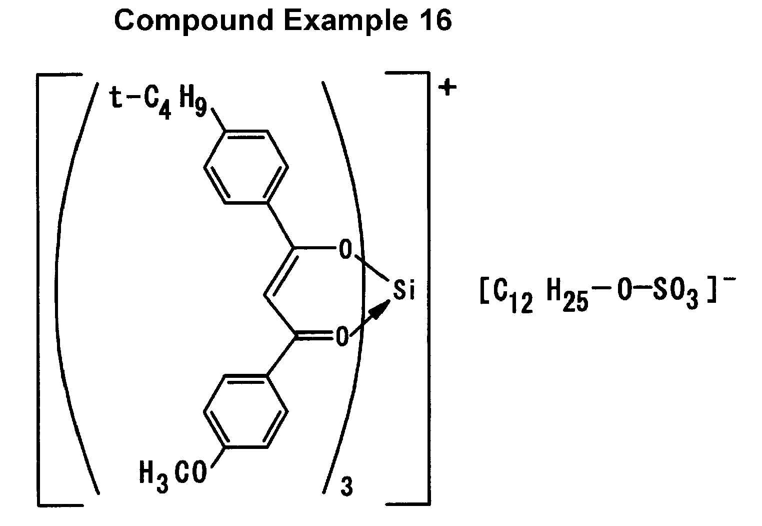 (t-C₄H₉ is a tertiary butyl group.) 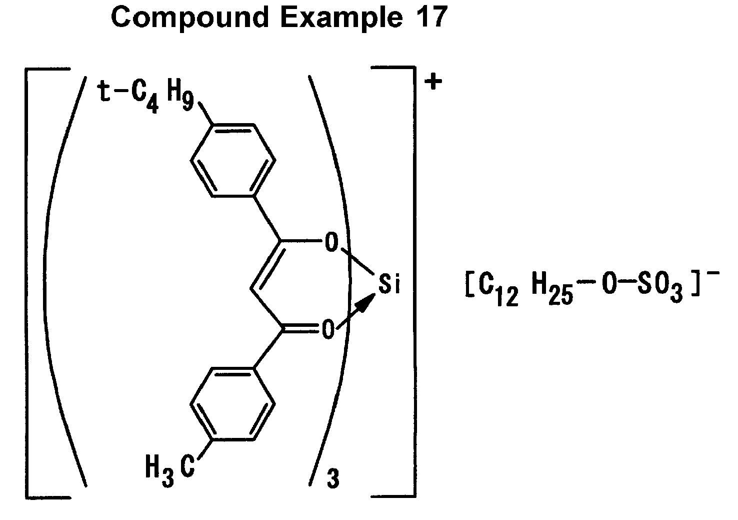 (t-C₄H₉ is a tertiary butyl group.) 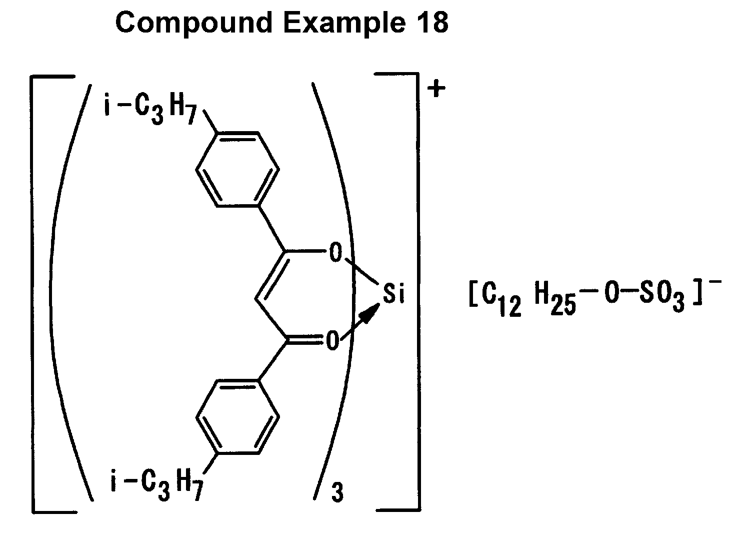 (i-C₃H₇ is an isopropyl group.) 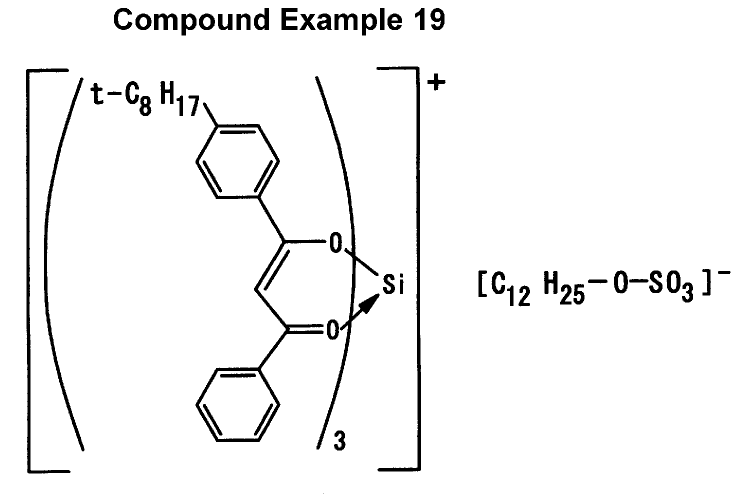 (t-C₈H₁₇ is a tertiary octyl group.) 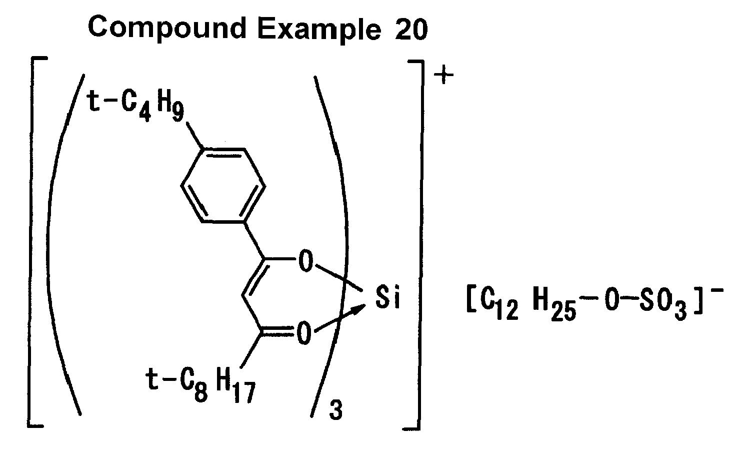 (t-C₄H₉ is a tertiary butyl group, t-C₈H₁₇ is a tertiary octyl group.) 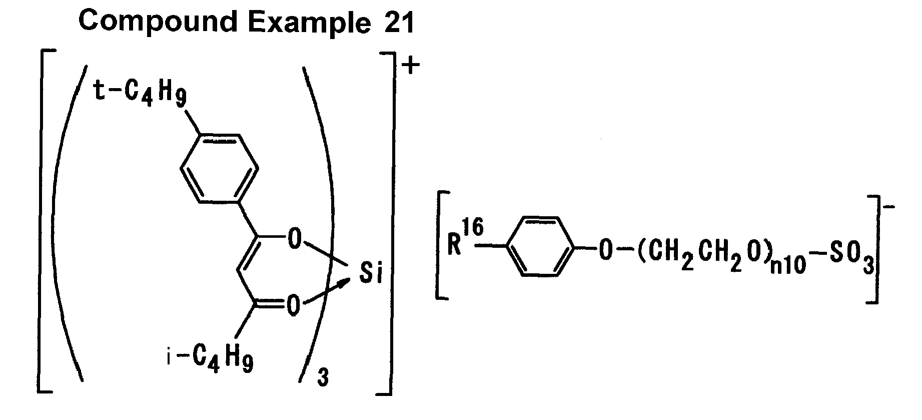 (t-C₄H₉ is a tertiary butyl group, i-C₄H₉ is an isobutyl group, n10 is 2 or more number, R¹⁶ is a group having a main component of C₉H₁₉.) 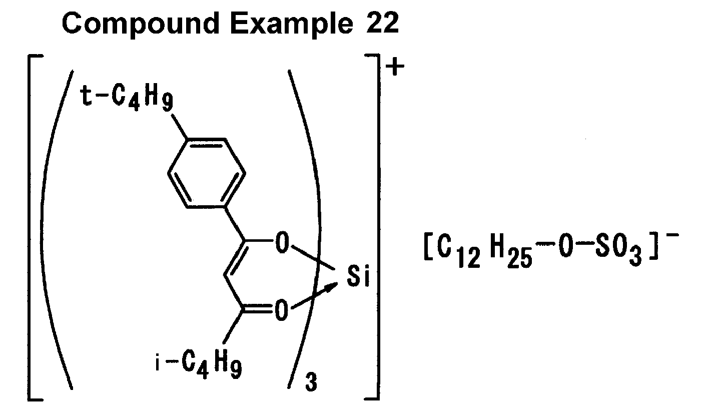 (t-C₄H₉ is a tertiary butyl group, i-C₄H₉ is an isobutyl group.) 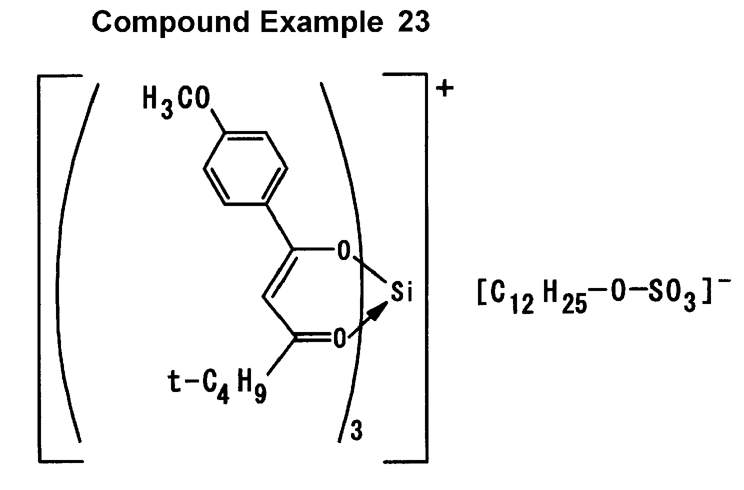 (t-C₄H₉ is a tertiary butyl group.) 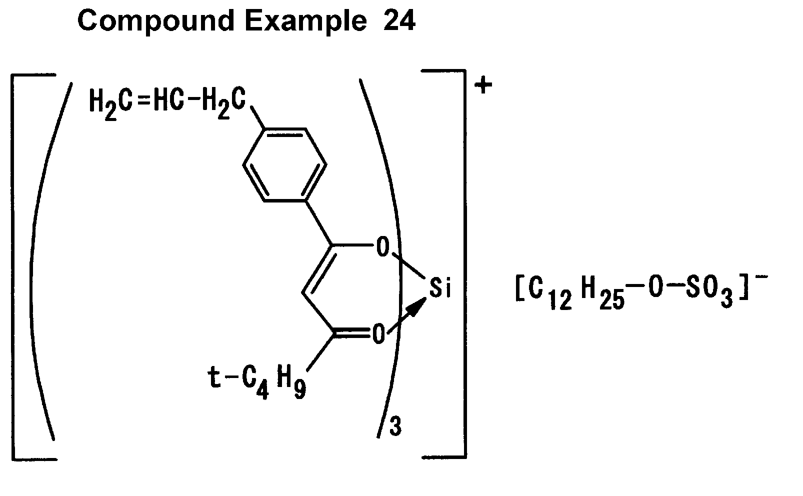 (t-C₄H₉ is a tertiary butyl group.)

The positive electrified charge control agent may comprise the sole compound or may comprise the plural compounds having different structural cation or anion among these silicon complex compounds. Furthermore, the positive electrified charge control agent may comprise usual charge control agents together.

The positive electrified toner for developing an electrostatic image of the present invention comprises the above-mentioned positive electrified charge control agent. It is preferable that the toner comprises 0.1 to 10 parts by weight of the charge control agent and 100 parts by weight of the resin for the toner. It is much preferable that 0.5 to 5 parts by weight of the charge control agent is comprised in the toner. The toner may further comprise the colorant.

The positive electrified toner for developing the electrostatic image is preferably the toner that the charge control agent and the colorant are added internally and kneaded to the resin for the toner. Guest particles including the charge control agent may adhere to the surface of host particles including the resin for the toner and the colorant. The host particles may include the charge control agent, and the guest particles may include the resin for the toner.

The positive electrified toner for developing the electrostatic image may comprise the charge control agent, the resin for the toner and the colorant. If necessary to improve quality of the toner, the toner may appropriately comprise a magnetic material, a fluid improvement agent or an offset prevention agent.

Examples of the resin for the toner are a commercial binding resin such as a thermoplastic resin illustrated with a styrene resin, a styrene-acrylate resin, a styrene-butadiene resin, a styrene-maleic acid resin, a styrene-vinylmethylether resin, a styrene-methacrylate copolymer, a polyester resin, a polypropylene resin; a thermosetting resin illustrated with a phenol resin, an epoxy resin. The exemplified resin may be used solely or plurally with blending.

When the resin for the toner is used to mix for the toner for full color by subtractive mixture of color stimuli, or the toner for an overhead projector (OHP), it is required that the resin for the toner has transparency, is nearly colorless to a point in which color tone obstruction of toner images is not generated, excellent compatibility with the charge control agent, fluidity under proper heat or pressure, possibility of fining. It is preferable that the resin for the toner is a styrene resin, an acrylate resin, a styrene-acrylate resin, a styrene-methacrylate copolymer, or a polyester resin.

Moreover, when the charge control agent of the present invention is included in the electrostatic powder paint to controls or raises the charge of the resin powder in the paint, examples of the resin in the paint are a thermoplastic resin such as an acrylate resin, a polyolefin resin, a polyester resin, a polyamide resin; a thermosetting resin such as a phenol resin, an epoxy resin. The exemplified resin may be used solely or plurally with blending.

A dye and/or a pigment may be used solely or plurally with blending, as the colorant for the toner for color or the electrostatic powder paint.

Examples of the colorant for the toner for color are organic pigment such as quinophtharone yellow, hansa yellow, isoindolinone yellow, benzidine yellow, perinone orange, perinone red, perylene maroon, rhodamine 6G lake, quinacridone red, rose bengale, copper phthalocyanine blue, copper phthalocyanine green, diketopyrrolopyrrole; inorganic pigment and metallic powder such as carbon black, titanium white, titanium yellow, ultramarine, cobalt blue, red iron oxide, aluminum powder, bronze; oil soluble dye and disperse dye such as an azo dye, a quinophthalone dye, an anthraquinone dye, a xanthene dye, a triphenylmethane dye, phthalocyanine dye, indophenol dye, indoaniline dye; triarylmethane dye modified with a resin illustrated as rosin, phenol that modified by rosin, maleic acid that modified by rosin; a dye and a pigment processed with higher fatty acid or resin and so on. The colorant may be used for the toner for color solely or plurally with blending. The dye and pigment having excellent spectral characteristics are used for regulation of the primary colors toner for full color suitably.

Moreover, examples of the colorant for the toner for chromatic mono-color are combinations of pigment and dye of similar colors, such as suitable combination of rhodamine pigment and dye, quinophthalone pigment and dye, phthalocyanine pigment and dye.

Examples of the magnetic material are ferromagnetic particulates such as iron, cobalt, and ferrite. Examples of the fluid improvement agent are silica, aluminum oxide, and titanium oxide. Examples of the offset prevention agent are wax and olefin wax having low molecular weight.

The positive electrified toner for developing the electrostatic image is manufactured as follows. The charge control agent, the resin for the toner, the colorant, if necessary the magnetic material, the fluid improvement agent, or the offset prevention agent are sufficiently mixed by a blender such as a ball mill. It is kneaded with melting by a heat-kneading machine such as a heating roll, a kneader or an extruder. After carrying out the cooling solidification thereof, it is granulated and classified, to obtain the unary toner which is the toner particles by the granulation method, having the average particle size ranging from 5 to 20 microns.

The toner particles can be manufactured by a preparing method under spraying and drying of a solution of each component, a suspension polymerization method, or an emulsion polymerization method. The suspension polymerization method is as follows. A monomer of the resin for the toner, the charge control agent, the colorant, and if necessary the magnetic material, the fluid improvement agent, the offset prevention agent, and an additive agent such as a polymerization initiator, a cross linking agent and a mold release agent are solved or dispersed homogeneously, to obtain a monomer composition. The composition is carried out polymerization reaction in continuous phase including a dispersion stabilizer such as aqueous phase with dispersing by a dispersion apparatus, to obtain the toner particles having desired particle size.

Examples of the monomer are styrene derivative such as styrene, methylstyrene; (meth)acrylate such as methyl acrylate, ethyl acrylate, ethyl methacrylate, n-butyl methacrylate; vinyl monomer such as acrylonitrile, methacrylonitrile, acrylamide.

Examples of dispersion stabilizer are a surface active agent such as sodium dodecylbenzenesulfonate; an organic dispersion agent such as polyvinyl alcohol, methyl cellulose, methylhydroxypropyl cellulose; an inorganic dispersion agent such as fine powder of polyvalent metal phosphate illustrated by calcium phosphate, magnesium phosphate and aluminum phosphate, fine powder of carbonate illustrated by calcium carbonate and magnesium carbonate; calcium metasilicate, calcium sulfate, barium sulfate, calcium hydroxide, aluminum hydroxide.

Examples of the polymerization initiator are azo or diazo initiators such as 2,2'-azoisobutyronitrile, azobisbutyronitrile; peroxide initiator such as benzoyl peroxide.

Moreover the other positive electrified toner for developing the electrostatic image is manufactured as follows. The host particles are the toner particles including the charge control agent by the above-mentioned granulation or polymerization method. The guest particles consisting of the particles of the charge control agent, or the guest particles including the particles which the charge control agent of 10 to 90 percent by weight is dispersed into the resin having dispersibility of the charge control agent, make adhesion to the surfaces of the host particles, to obtain the toner.

Examples of the method that the guest particles make adhesion to the surfaces of the host particles, are an external addition method, and a method that the guest particles are stuck to the host particles by a hybridization system. Examples of the resin having dispersibility of the charge control agent are a styrene resin, a styrene-acrylate resin, a styrene-butadiene resin, a styrene-maleic acid resin, a styrene-methylvinylether resin, a styrene-methacrylate copolymer, a phenol resin, an epoxy resin, a paraffin wax, an acrylate resin and a polyester resin. The exemplified resin may be used solely or plurally with blending.

Although the examples that the host particles are the toner particles including the charge control agent by the granulation method or the polymerization method are described, the host particles may be the toner including no charge control agent by the granulation method or the polymerization method.

A binary component developer using the positive electrified toner for the electrostatic image development is prepared with mixing the toner and a carrier. This developer is used for developing by a binary component magnetic brush development method and so on. Examples of the carrier are powder of iron or nickel or magnetite or ferrite and glass beads whose particle size is ranging from 50 to 200 microns, the modified powder thereof or the modified beads thereof whose surfaces are coated with an acrylate copolymer, a styrene-acrylate copolymer, a styrene-methacrylate copolymer, a silicone resin, a polyamide resin or a fluoroethylene resin.

A unary component developer using the positive electrified toner for the electrostatic image development is prepared with adding and dispersing appropriate ferromagnetic particulates such as powder of iron or nickel or ferrite on the occasion of preparing the toner. This developer is used for developing by a contact development method or a jumping development method.

A charge-giving composition of the present invention comprises the positive electrified charge control agent which comprises the silicon complex compound represented by the chemical formula (1) as an effective component, and a solvent and/or a dispersant. The silicon complex compound may be used solely or plurally with blending. It is preferable that the composition comprises 0.5 to 200 parts by weight of the silicon complex compound against 100 parts by weight of the solvent and/or the dispersant. It is much preferable that 2 to 100 parts by weight of the silicon complex compound is comprised in the composition.

Examples of the solvent or the dispersant in the charge-giving composition are a hydrophilic solvent or a hydrophobic solvent.

Examples of the hydrophilic solvent are an alcohols such as methanol, ethanol, propanol, isopropanol, butanol; a glycol ethers such as ethylene glycol monomethyl ether, ethylene glycol monoethyl ether, diethylene glycol dimethyl ether; a ketones such as acetone, methyl ethyl ketone, methyl isobutyl ketone, cyclohexanone; a nonprotonic polar solvent such as N,N-dimethyl formaldehyde, N,N-dimethyl acetoamide, N-methyl-2-pyrrolidone, dimethyl sulfoxide. Examples of the hydrophobic solvent are an aromatic solvents such as xylene, toluene; a hydrocarbon solvent such as hexane. These solvents may be used solely or plurally with blending.

The dispersant may be a resin for dispersion. Examples of such resin are a poly(meth)acrylate resin such as poly(methyl acrylate) resin, poly(methyl methacrylate) resin; a polystyrene resin; a polyacrylonitrile resin; a synthetic rubber having an isoprene unit or a butadiene unit; a polyester resin; a polyurethane resin; a polyamide resin; an epoxy resin; a rosin resin; a polycarbonate resin; a phenol resin; a chlorinated paraffin; a polyethylene; a polypropylene; a fluororesin such as polytetrafluoroethylene; a silicone resin. These resins may be used solely or plurally with blending. These resins may be mixed with the above-mentioned solvents.

The charge-giving component of the present invention comprises at least one selected from a carrier powder, a developing sleeve and a blade which give a charge by contacting to the toner for an electrostatic photography, and at least one thereof is coated with or formed by the above-mentioned charge-giving composition. Concretely, 0.1 to 10 parts by weight, more preferably 0.5 to 2 parts by weight of the charge control agent is included against the carrier powder. Furthermore, 0.01 to 10mg/cm², more preferably 0.1 to 2mg/cm² of the charge control agent is included against the developing sleeve or the blade.

The charge-giving component may be formed by soaking the carrier powder material body and the developing sleeve and the blade into the charge-giving composition which the charge control agent is dispersed into the solvent or the dispersant such as the resin, and then drying. It may be formed by spraying the charge-giving composition on the carrier powder material and then drying. It may be formed by applying the charge-giving composition onto the carrier powder material body using a painting brush, and then drying.

The charge-giving component may be the developing sleeve or the blade, which the charge-giving composition is pressed out onto a base material and a laminating processing or a molding processing thereof is carried out.

The silicon complex compound is exposed on the surface of the charge-giving component formed by such method.

The carrier powder is not limited in particular. Examples of the carrier powder are a metallic powder such as powder of iron or nickel or aluminum or copper whose particle size is ranging from 50 to 200 microns; a powder of alloy; a powder of metallic oxide such as powder of magnetite or ferrite; glass beads, a glass powder; a ceramic powder; a modified powder thereof or modified beads thereof whose surfaces are coated with an acrylate copolymer, a styrene-acrylate copolymer, a styrene-methacrylate copolymer, a silicone resin, a polyamide resin or a fluoroethylene resin; a resin powder; a resin powder containing a magnetic substance.

Examples of materials of the developing sleeve are a metal such as iron, aluminum, nickel; an alloy such as stainless steel; ceramics; plastics.

The charge-giving component comprising the positive electrified charge control agent has excellent preservation stability, environmental resistance and durability. Therefore, it is unnecessary to exchange the charge-giving component such as the carrier powder, the developing sleeve or the blade for a long period of time.

A charge control method of a toner for an electrostatic photography of the present invention comprises a step for making the toner electrified by contact and friction between the toner for the electrostatic photography and the charge-giving component.

The toner for the electrostatic photography may comprise the resin for the toner and the colorant. If necessary to improve quality of the toner, the toner may appropriately comprise a magnetic material, a fluid improvement agent or an offset prevention agent. The toner for the electrostatic photography comprises the same components as the positive electrified charge control agent except that the charge control agent is not comprised.

The toner for the electrostatic photography may comprise the resin for the toner. If necessary, the toner may comprise the colorant or another charge control agent.

The toner for the electrostatic photography may be a binary component toner used for a magnetic brush development method or a cascade development method. In the magnetic brush development method, the toner is transferred with the carrier of the iron powder. In the cascade development method, the toner is transferred with the beads carrier. A binary component developer is prepared with mixing the toner and the carrier.

The toner for the electrostatic photography may be a unary component toner used for a powder cloud development method, a jumping development method or a contact development method. In the powder cloud development method, the toner is sprayed. In the jumping development method, the toner is flown by latent electric field to be developed. A unary component developer is prepared with adding and dispersing appropriate ferromagnetic particulates such as powder of iron or nickel or ferrite on the occasion of preparing the toner.

The toner to which the charge is given by the charge-giving component has excellent electrification stability. Therefore, the image developed using the toner has excellent quality.

Hereunder, embodiments of the present invention are explained in detail. The invention is not limited to these embodiments.

The following examples 1 to 7 indicate embodiments of the synthesis of the silicon complex compound used for the positive electrified charge control agent that applies this invention.

### (Example 1)

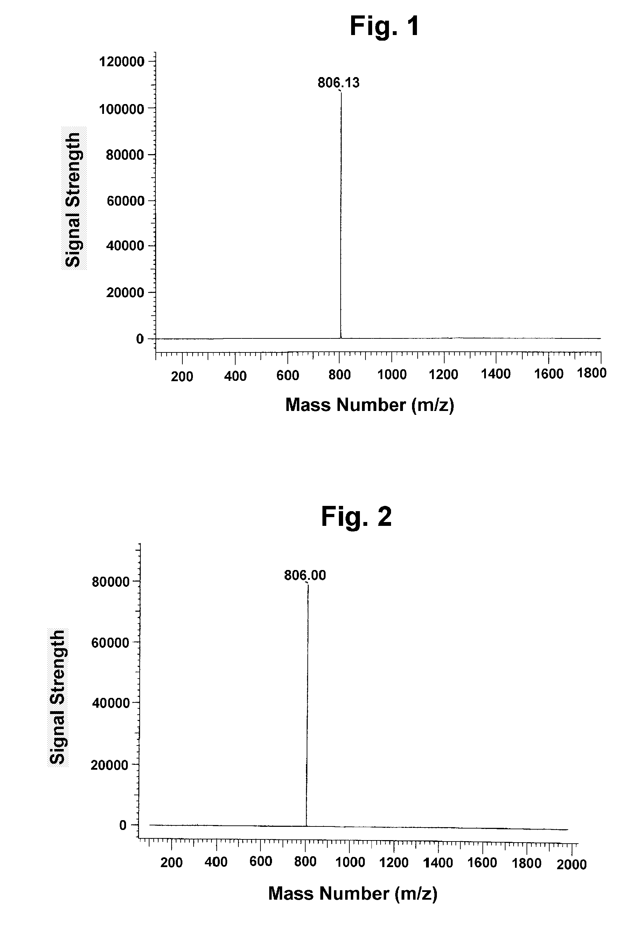

(1) Synthesis of a silicon complex intermediate
   160.0g (0.614mol) of 1-(4-tert-butylphenyl)-4,4'-dimethylpentane- 1,3-dion as beta-diketone compound was dissolved in 800ml of ethyl acetate. 34.8g (0.204mol) of silicon tetrachloride was added dropwise at the room temperature thereto. It was refluxed for 2 hours and cooled, and then precipitated white crystals were filtrated. It was washed with 600ml of ethyl acetate, and then washed with 2000ml of water. It was dried at 80 degrees centigrade for 24 hours, to obtain 107.4g (0.128mol) of the silicon complex intermediate of Compound Example a represented by following chemical formula. 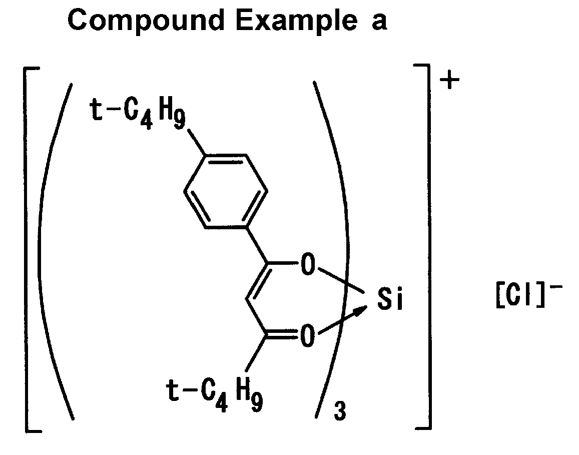 (t-C₄H₉ is a tertiary butyl group.)
   The data of measurement result of the silicon complex intermediate of the Compound Example a by the liquid chromatography mass spectrometric analysis (LC/MS) using M-8000 TYPE LC/3DQMS that is available from Hitachi, Ltd. is shown in Fig 1. An actual value m/z is 806.13 as Fig. 1, and mostly in agreement with 806.2 of the theoretical value which the chloride ion is eliminated from this compound having 841.6 of the theoretical value. So it is identified as the desired Compound Example a.
(2) Anion exchange
   84g (0.1mol) of the silicon complex intermediate was dispersed into 1000mL of 1:1 mixed solvent of water and methanol. 57g (0.2mol) of MONOGEN Y-500 of alkyl sulfate sodium salt that is available from Dai-ichi Kogyo Seiyaku Co., Ltd. as the anionic organic compound was added thereto. It was stirred and mixed for 24 hours at the room temperature. Obtained reactant was filtrated and washed with water until the electric conductivity of the filtrate lowered. It was dried at 80 degrees centigrade, to obtain positive electrified charge control agent comprising 77g of the silicon complex compound represented by the Compound Example 1.
   The various silicon complex compounds of the present invention can be synthesized by the similar procedure. The various positive electrified charge control agents of the present invention can be also prepared by the similar procedure.
   The data of measurement result of the silicon complex compound of the Compound Example 1 by the liquid chromatography mass spectrometric analysis (LC/MS) using M-8000 TYPE LC/3DQMS that is available from Hitachi, Ltd. is shown in Fig 2. An actual value m/z is 806.00 as Fig. 2, and mostly in agreement with 806.2 of the theoretical value which the dodecyl sulfate ion is eliminated from this compound having 1071.6 of the theoretical value. Furthermore, according to CHNS elemental analysis of the silicon complex compound of the Compound Example 1, the content of C in the compound was 70.19% (theoretical value: 70.61%), the content of H in the compound was 8.80% (theoretical value: 8.84%), and the content of S in the compound was 3.13% (theoretical value: 2.99%), and they were mostly in agreement with the theoretical values. So it is identified as the desired Compound Example 1.
   When the electric conductivity of the silicon complex compound of Compound Example 1 was measured, it was 117 micro S.

### (Example 2)

The silicon complex intermediate of Compound Example a was obtained by the similar procedure of Example 1(1). A positive electrified charge control agent comprising 86g of the silicon complex compound represented by the Compound Example 2 was obtained by the similar procedure of Example 1(2) except that 279g (0.2mol) of HITENOL 227L of poly(oxyethylene) alkyl ether sulfate sodium salt that is available from Dai-ichi Kogyo Seiyaku Co., Ltd. was used instead of 57g (0.2mol) of MONOGEN Y-500 of alkyl sulfate sodium salt used in Example 1(2).

When the electric conductivity of the silicon complex compound of Compound Example 2 was measured, it was 132 micro S.

### (Example 3)

The silicon complex intermediate of Compound Example a was obtained by the similar procedure of Example 1(1). A charge control agent comprising 83g of the silicon complex compound represented by the Compound Example 3 was obtained by the similar procedure of Example 1(2) except that 487g (0.2mol) of HITENOL N-093 of poly(oxyethylene) alkyl phenyl ether sulfate sodium salt that is available from Dai-ichi Kogyo Seiyaku Co., Ltd. was used instead of the anionic organic compound used in Example 1(2).

### (Example 4)

The silicon complex intermediate of Compound Example b represented by following chemical formula was obtained by the similar procedure of Example 1(1) except that another beta-diketone compound was used instead of the beta-diketone compound used in Example 1(1). 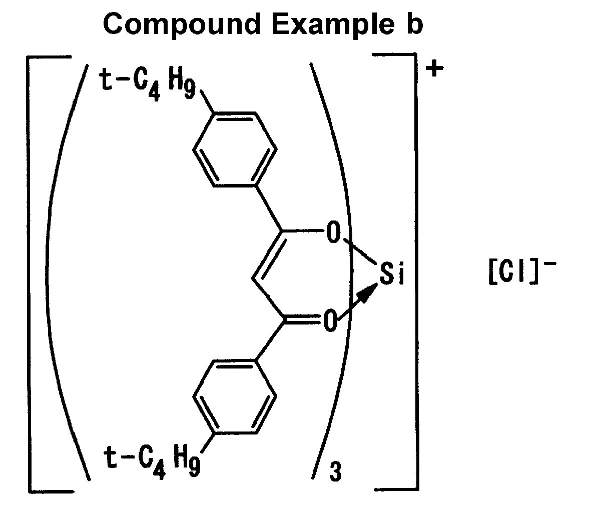 (t-C₄H₉ is a tertiary butyl group.)

Next, a positive electrified charge control agent comprising 101g of the silicon complex compound represented by the Compound Example 12 was obtained by the similar procedure of Example 1(2) except that 107g (0.1mol) of the silicon complex intermediate of Compound Example b was used instead of 84g (0.1mol) of the silicon complex intermediate of Compound Example a used in the anion exchange procedure of Example 1(2).

### (Example 5)

The silicon complex intermediate of Compound Example c represented by following chemical formula was obtained by the similar procedure of Example 1(1) except that another beta-diketone compound was used instead of the beta-diketone compound used in Example 1(1). 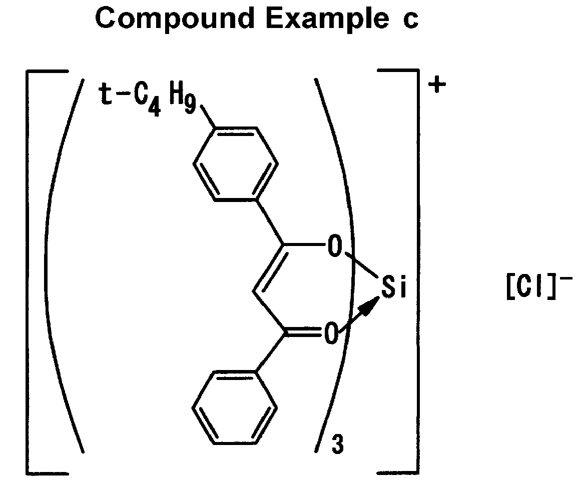 (t-C₄H₉ is a tertiary butyl group.)

Next, a positive electrified charge control agent comprising 84g of the silicon complex compound represented by the Compound Example 13 was obtained by the similar procedure of Example 1(2) except that 90g (0.1mol) of the silicon complex intermediate of Compound Example c was used instead of 84g (0.1mol) of the silicon complex intermediate of Compound Example a used in the anion exchange procedure of Example 1(2).

### (Example 6)

The silicon complex intermediate of Compound Example d represented by following chemical formula was obtained by the similar procedure of Example 1(1) except that another beta-diketone compound was used instead of the beta-diketone compound used in Example 1(1). 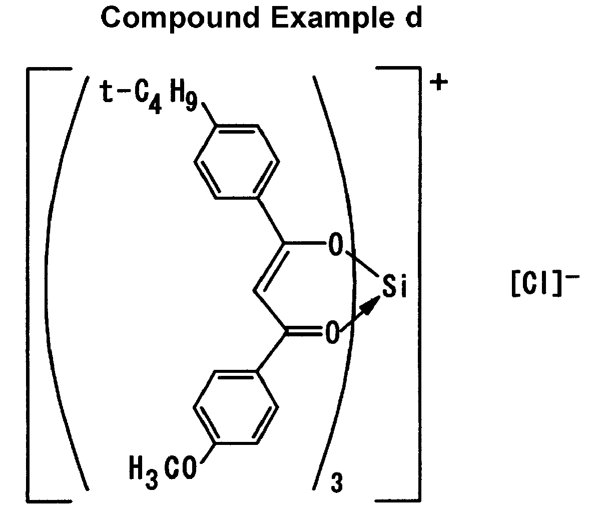 (t-C₄H₉ is a tertiary butyl group.)

Next, a positive electrified charge control agent comprising 95g of the silicon complex compound represented by the Compound Example 16 was obtained by the similar procedure of Example 1(2) except that 99g (0.1mol) of the silicon complex intermediate of Compound Example d was used instead of 84g (0.1mol) of the silicon complex intermediate of Compound Example a used in the anion exchange procedure of Example 1(2).

### (Example 7)

The silicon complex intermediate of Compound Example e represented by following chemical formula was obtained by the similar procedure of Example 1(1) except that another beta-diketone compound was used instead of the beta-diketone compound used in Example 1(1).

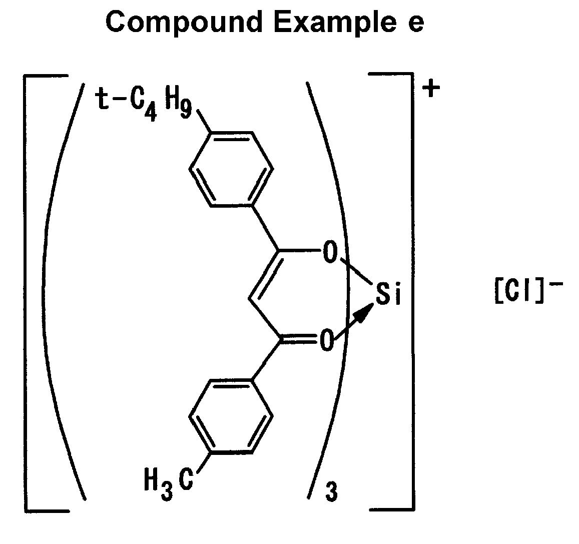

### (t-C₄H₉ is a tertiary butyl group.)

Next, a positive electrified charge control agent comprising 90g of the silicon complex compound represented by the Compound Example 17 was obtained by the similar procedure of Example 1(2) except that 94g (0.1mol) of the silicon complex intermediate of Compound Example e was used instead of 84g (0.1mol) of the silicon complex intermediate of Compound Example a used in the anion exchange procedure of Example 1(2).

Following examples 8 to 19 are examples preparing positive electrified toners for developing an electrostatic image that applies the present invention and developers containing the toner.

### (Example 8)

100 parts by weight of styrene-acrylate copolymer: CPR-600B which is available from Mitsui Chemicals, Inc., 3 parts by weight of low grade polypropylene: VISCOL 550-P which is available from Sanyo Chemical Industries, Ltd., 5 parts by weight of color dye of magenta: C.I. Pigment Red 57:1, and 1 part by weight of the charge control agent comprising Compound Example 1 prepared in Example 1, were pre-mixed homogeneously using a high speed mixer. It was kneaded with melting by an extruder. It was cooled, and granulated roughly by a vibration mill. The prepared rough granules were granulated finely using an air jet mill equipping with a classifier, to obtain the magenta toner having 10 microns of the particle size thereof.

5 parts by weight of the obtained toner and 95 parts by weight of the carrier of iron powder: TEFV200/300 which is available from Powder Tech Corporation were mixed to prepare the developer.

After the developer was weighed into a plastic bottle, it was agitated at 100 r.p.m. rotating speed by a boll mill to be electrified. The quantity of the initial electrification (a value after three minutes) was measured under the standard condition of 50% relative humidity (RH) at 25 degrees centigrade. Furthermore, the electrification stability was evaluated by measuring the quantity of the frictional electrification at every agitation time (minute). The electrification stability was evaluated with two ranks. In case of excellent electrification stability, it was indicated as "O", and if in the other case, it was indicated as "X". The initial blow-off quantity of the electrification and the environmental stability thereof were measured in the same way under the low temperature and humidity condition of 30% relative humidity at 10 degrees centigrade, or the high temperature and humidity condition of 90% relative humidity at 35 degrees centigrade. The environmental stability of the electrification was evaluated with two ranks. In case of excellent environmental stability, was indicated as "O", and if in the other case, was indicated as "X".

The quantity of the electrification was measured using a measuring instrument TB-200 of a blow-off quantity of the electrification, which is available from Toshiba Chemical Corporation.

The images of the toner were formed using the developer by a commercial copying machine. Fogginess, reproducibility of fine lines, electrification stability and durability, and phenomenon of offset were visually observed as regards the formed images of the toner.

The images of the toner were evaluated with two ranks. In case of no fogginess, it was indicated as "O", and if in the other case, it was indicated as "X". In case of excellent reproducibility of fine lines, it was indicated as "O", and if in the other case, it was indicated as "X". In case of excellent electrification stability and durability, it was indicated as "O", and if in the other case, it was indicated as "X". In case of observation of no phenomenon of offset, it was indicated as "O", and if in the other case, it was indicated as "X".

These evaluation results are shown in Table 2.

### (Examples 9 to 14)

Toners and developers were obtained by the similar procedure of Example 8 except that the charge control agents comprising Compound Example 2 or 3 or 12 or 13 or 16 or 17 prepared in Examples 2 to 7 were used respectively, as shown in Table 1.

**Table 1**

| Examples | Example 9 | Example 10 | Example 11 | Example 12 | Example 13 | Example 14 |
|---|---|---|---|---|---|---|
| Compound Examples | Compound Example 2 | Compound Example 3 | Compound Example 12 | Compound Example 13 | Compound Example 16 | Compound Example 17 |

### (Example 15)

100 parts by weight of styrene-acrylate copolymer: CPR-600B which is available from Mitsui Chemicals, Inc., 5 parts by weight of color dye of yellow: C.I. pigment yellow 180, 3 parts by weight of low grade polypropylene: VISCOL 550-P which is available from Sanyo Chemical Industries, Ltd., 1 part by weight of the charge control agent comprising Compound Example 13 prepared in Example 5, were treated by the similar procedure of Example 8, to prepare the yellow toner having 10 microns of the average particle size thereof and the developer. The obtained developer was evaluated by the similar procedure of Example 8. The measurement results thereof are shown in Table 2.

### (Example 16)

100 parts by weight of polyester resin: ER-561 which is available from Mitsubishi Rayon Co., Ltd., 3 parts by weight of low grade polypropylene: VISCOL 550-P which is available from Sanyo Chemical Industries, Ltd., 6 parts by weight of carbon black: #44 which is available from Mitsubishi Chemical Corporation, 1 part by weight of the charge control agent comprising Compound Example 16 prepared in Example 6, were treated by the similar procedure of Example 8, to prepare the black toner having 10 microns of the average particle size thereof and the developer. The obtained developer was evaluated by the similar procedure of Example 8. The measurement results thereof are shown in Table 2.

### (Example 17)

80 parts by weight of styrene monomer, 20 parts by weight of n-butyl acrylate monomer, 5 parts by weight of color dye of yellow: C.I. pigment yellow 180, 1.8 parts by weight of 2,2'-azoisobutyronitrile, 1 part by weight of the charge control agent comprising Compound Example 17 prepared in Example 7, were pre-mixed homogeneously using a high speed mixer, to obtain the monomer composition.

100ml of 0.1mol% sodium tertiary phosphate aqueous solution was diluted with 600ml of distilled water. 18.7ml of 1.0mol/L calcium chloride aqueous solution was added thereto gradually with stirring, then 0.15g of 20% of concentration of sodium dodecylbenzenesulfonate aqueous solution was added thereto, to prepare dispersion liquid.

The dispersion liquid was added to the above monomer composition. It was heated until 65 degrees centigrade with fast stirring using T.K. HOMO MIXER that is available from Tokushu Kika Kogyo Co., Ltd, then stirred for 30 minutes. Furthermore, it was heated until 80 degrees centigrade with stirring at 100 r.p.m. using a usual stirrer in turn, and then polymerization thereof was carried out at 80 degrees centigrade for 6 hours.

After the polymerization, the reaction mixture was cooled, and the solid was filtered out. After the filtered solid was soaked into 5 weight% of concentration of hydrochloric acid aqueous solution in order to decompose calcium phosphate which is functioned as the dispersing agent, the solid was washed with water until its washing was neutral. It was dehydrated and dried, to obtain the yellow toner having 10 microns of the average particle size thereof.

5 parts by weight of the obtained toner and 95 parts by weight of carrier of iron powder: TEFV200/300 which is available from Powder Tech Corporation were mixed to prepare the developer. The obtained developer was evaluated by the similar procedure of Example 8. The measurement results thereof are shown in Table 2.

### (Example 18)

80 parts by weight of styrene monomer, 20 parts by weight of n-butyl acrylate monomer, 5 parts by weight of carbon black: MA-100 which is available from Mitsubishi Chemical Corporation, 1.8 parts by weight of the 2,2'-azoisobutyronitrile, 1 part by weight of the charge control agent comprising Compound Example 1 prepared in Example 1, were treated by the similar procedure of Example 17, to prepare the black toner having 13 microns of the average particle size thereof and the developer. The obtained developer was evaluated by the similar procedure of Example 8. The measurement results thereof are shown in Table 2.

### (Example 19)

100 parts by weight of styrene-acrylate copolymer: CPR-600B which is available from Mitsui Chemicals, Inc., 3 parts by weight of low grade polypropylene: VISCOL 550-P which is available from Sanyo Chemical Industries, Ltd., 5 parts by weight of color dye of magenta: C.I. Pigment Red 57:1, were pre-mixed homogeneously using a high speed mixer. It was kneaded with melting by an extruder. It was cooled, and granulated roughly by a vibration mill. The prepared rough granules were granulated finely using an air jet mill equipping with a classifier, to prepare the host particles of magenta toner having 10 microns of the particle size thereof.

1 part by weight of the guest particles of the charge control agent comprising Compound Example 1 prepared in Example 1 was added externally to 108 parts by weight of the prepared host particles, to obtain the positive electrified toner for developing an electrostatic image.

5 parts by weight of the toner and 95 parts by weight of carrier of iron powder: TEFV200/300 which is available from Powder Tech Corporation were mixed to prepare the developer. The obtained developer was evaluated by the similar procedure of Example 8. The measurement results thereof are shown in Table 2.

### (Comparative Example 1)

The toner and the developer were obtained by the similar procedure of Example 8 except that the silicon complex compound of Compound Example f represented by following chemical formula was used instead of the silicon complex compound of Compound Example 1 used in the Example 8. The obtained developer was evaluated by the similar procedure of Example 8. The measurement results thereof are shown in Table 2.

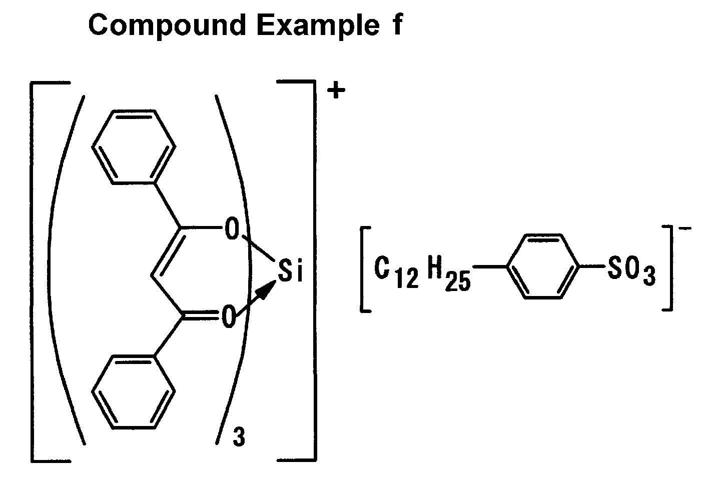

### (Comparative Example 2)

The positive electrified toner for developing an electrostatic image and the developer were obtained by the similar procedure of Example 8 except that the silicon complex intermediate of Compound Example a was used instead of the silicon complex compound of Compound Example 1 used in the Example 8. The obtained developer was evaluated by the similar procedure of Example 8.

### (Comparative Example 3)

The compound with incomplete anion exchange reaction was prepared by the similar procedure of Example 1(2) except that the condition of the anion exchange reaction was changed as follows when the Compound Example 1 was synthesized.

First, 84g (0.1mol) of the silicon complex intermediate of Compound Example a was dispersed into 1000ml of water. 34g (0.12mol) of MONOGEN Y-500 of alkyl sulfate sodium salt that is available from Dai-ichi Kogyo Seiyaku Co., Ltd. was added thereto. It was stirred and mixed for 24 hours at the room temperature. Obtained reactant was filtrated and washed with water, and then dried at 80 degrees centigrade, to obtain 80g of the charge control agent mainly comprising the silicon complex compound represented by Compound Example 21. A content of allowable residual chlorine in the charge control agent was 0.31%.

The toner and the developer were obtained by the similar procedure of Example 8 except that the charge control agent comprising the silicon complex compound with incomplete anion exchange reaction was used instead of the silicon complex compound of Compound Example 1 used in the Example 8. The obtained developer was evaluated by the similar procedure of Example 8. The measurement results thereof are shown in Table 2.

**Table 2**

| Property of Developer | | | | | | | Property of Toner Image | | | | |
|---|---|---|---|---|---|---|---|---|---|---|---|
| | | Quantity of Initial Electrification (µC/g) | Electrification Stability | Environmental (µC/g) | | Stability | | Fogginess | Reproducibility of Fine Line | Electrification Stability and Durability | Phenomenon of Offset |
| | | | | Low Temperature and Low Humidity (10°C : 30%RH) | | High Temperature and High Humidity (35°C : 90%RH) | | | | | |
| Ex. | 8 | 70.5 | O | 71.0 | O | 68.4 | O | O | O | O | O |
| | 9 | 51.2 | ○ | 52.0 | ○ | 51.0 | O | O | O | O | O |
| | 10 | 54.1 | O | 54.9 | O | 53.9 | O | O | O | O | O |
| | 11 | 75.1 | ○ | 76.5 | O | 73.8 | O | O | O | O | O |
| | 12 | 50.0 | O | 51.2 | O | 48.9 | O | O | O | O | O |
| | 13 | 68.5 | O | 69.2 | ○ | 67.0 | O | O | O | O | O |
| | 14 | 74.1 | O | 75.2 | ○ | 72.9 | O | O | O | O | O |
| | 15 | 50.5 | O | 51.7 | O | 49.9 | O | O | O | O | O |
| | 16 | 27.3 | O | 27.9 | ○ | 26.9 | ○ | O | O | O | O |
| | 17 | 35.3 | ○ | 36.0 | O | 34.5 | O | O | O | O | O |
| | 18 | 30.4 | O | 30.7 | O | 30.0 | O | O | O | O | O |
| | 19 | 69.4 | ○ | 70.7 | O | 68.4 | O | O | O | O | O |
| Comp. Ex. | 1 | 47.6 | O | 53.0 | X | 42.8 | X | O | O | X | O |
| | 2 | 64.4 | ○ | 67.2 | X | 56.2 | X | ○ | ○ | X | O |
| | 3 | 64.9 | O | 66.9 | O | 60.1 | X | O | O | X | O |

According to Table 2, it is obvious that the developers of Examples have excellent electrification stability, electrification durability and environmental stability. The toner images formed using the developers have no fogginess, excellent reproducibility of fine lines, excellent electrification stability and durability. Furthermore, the phenomenon of offset of the toner images is not observed. On the other hand, the developers of Comparative Examples have bad environmental stability, and are unsuitable for the use under the condition of high temperature and high humidity such as summer, or the condition of changing the temperature and the humidity.

The following examples indicate embodiments of the preparation of the charge-giving composition comprising the obtained silicon complex compound as the charge control agent, the preparation of the charge-giving component using the charge-giving composition, and the charge control method of the toner for the electrostatic photography using the charge-giving component.

### (Example 20)

100g of the poly(methyl methacrylate) resin was dissolved in 1000mL of xylene. 50g of obtained Compound Example 1 was mixed thereto, to obtain a charge-giving composition 1.

The surfaces of 1000g of the ferrite carrier: F-150 which is available from Powder Tech Corporation were coated with the obtained charge-giving composition 1 using a fluid bed type coating equipment, to obtain a charge-giving component 1 (carrier).

5 parts by weight of the toner obtained by the similar procedure of Example 8 was mixed with 95 parts by weight of the obtained charge-giving component 1 (carrier), to prepare the developer. The obtained developer was evaluated by the similar procedure of Example 8. The measurement results thereof are shown in Table 3.

### (Example 21)

100g of the styrene-methyl methacrylate copolymer resin was dissolved in 1000mL of toluene. 50g of obtained Compound Example 16 was mixed thereto, to obtain a charge-giving composition 2.

The surfaces of 1000g of the ferrite carrier: F-150 which is available from Powder Tech Corporation were coated with the obtained charge-giving composition 2 using a fluid bed type coating equipment, to obtain a charge-giving component 2 (carrier).

5 parts by weight of the toner obtained by the similar procedure of Example 8 was mixed with 95 parts by weight of the obtained charge-giving component 2 (carrier), to prepare the developer. The obtained developer was evaluated by the similar procedure of Example 8. The measurement results thereof are shown in Table 3.

**Table 3**

| Property of Developer | | | | Property of Toner Image | | | | |
|---|---|---|---|---|---|---|---|---|
| Example No. | Quantity of Initial Electrification (µC/g) | Electrification Stability | Environmental Stability (µC/g) | | Fogginess | Reproducibility of Fine Line | Electrification Stability and Durability | Phenomenon of Offset |
| | | | Low Temperature and Low Humidity (10°C : 30%RH) | High Temperature and High Humidity (35°C : 90%RH) | | | | |
| Example 20 | -25.2 | O | O | O | O | O | O | O |
| Example 21 | -31.8 | O | O | O | O | O | O | O |

According to Table 3, it is obvious that the developers of Examples 20 and 21 have excellent electrification stability, electrification durability and environmental stability. The toner images formed using the developers have no fogginess, excellent reproducibility of fine lines, excellent electrification stability and durability. Furthermore, the phenomenon of offset of the toner images is not observed.

The charge control agent comprising the silicon complex compound of the present invention causes excellent positive electrification property of the toner for developing the electrostatic image and the powder paint. The charge control agent is used by being added to not only monochrome toner but also various chromatic color toners extensively.

The toner for developing the electrostatic image comprising the charge control agent is suitable to develop the electrostatic image on the photosensitive frame made from any matter of regardless of organic or inorganic type. Furthermore, not only a regular paper but also a processing paper and a processing film are suitable as transfer recording mediums.

The charge-giving composition of the present invention is used as a raw material of the charge-giving component, which is used on the occasion of copying or printing by the electro photography of a copy machine, printer or facsimile, such as the carrier powder, the developing sleeve and the blade. According to the charge control method of the toner for the electrostatic photography using the charge-giving component which comprises the charge-giving composition, the charge-giving component gives the negative charge to the toner for the electrostatic photography and causes excellent electrification property and electrification stability. The toner is fixed on the transfer recording medium such as the paper and the film, so the method is used for obtaining the vivid images with no fogginess.

## Claims

1. A positive electrified charge control agent comprising a silicon complex compound represented by the following chemical formula (1) 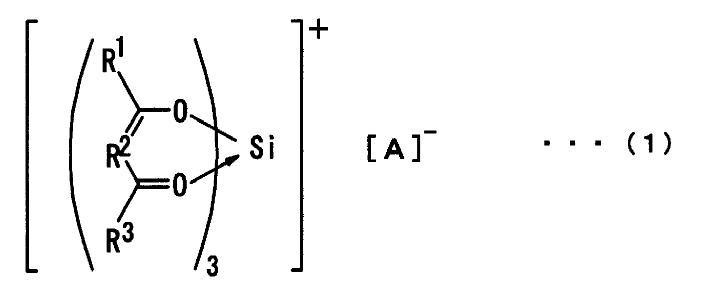 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion).

2. The positive electrified charge control agent according to claim 1,
wherein said silicon complex compound is represented by the following chemical formula (2) 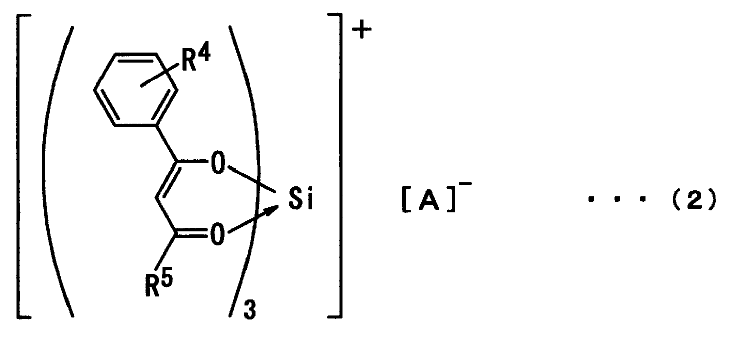 (in the formula (2), R⁴ has 1 to 8 carbons and is an alkyl group, an alkenyl group or an alkoxyl group; R⁵ has 1 to 8 carbons and is an alkyl group or an alkenyl group, or an aryl group having no substitutional group or having substitutional groups illustrated with an alkyl group having 1 to 8 carbons, an alkenyl group having 1 to 8 carbons and an alkoxyl group having 1 to 8 carbons; [A]⁻ is the same above).

3. The positive electrified charge control agent according to claim 2,
wherein R⁴ is an alkyl group having 1 to 8 carbons; R⁵ is an isopropyl group, a tert-butyl group, an isobutyl group, a tert-octyl group or an aryl group having no substitutional group or having substitutional groups illustrated with an alkyl group having 1 to 8 carbons and an alkoxyl group having 1 to 8 carbons in the formula (2).

4. The positive electrified charge control agent according to claim 2,
wherein said silicon complex compound represented by the chemical formula (2) is a compound obtained by a reaction of a sulfate anion type organic compound with a beta-diketone silicon compound represented by the following chemical formula (3) 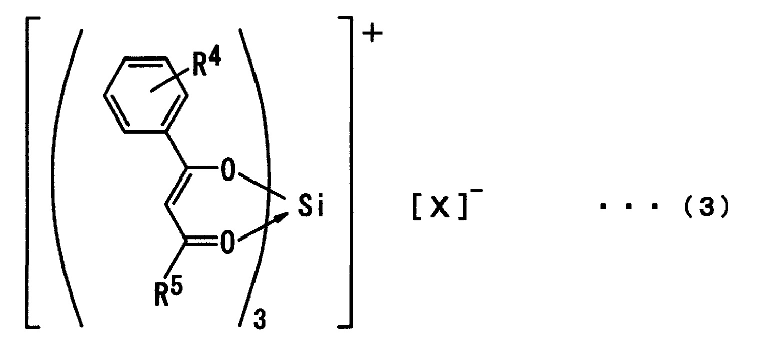 (in the formula (3), R⁴ and R⁵ are the same above, X is a halogen atom).

5. The positive electrified charge control agent according to claim 4,
wherein a content of allowable residual halogen derived from the beta-diketone silicon compound represented by the chemical formula (3) is at most 0.2%.

6. The positive electrified charge control agent according to claim 4,
wherein said sulfate anion type organic compound is an alkyl sulfate or a salt thereof, a poly(oxyethylene) alkyl ether sulfate or a salt thereof, or a poly(oxyethylene) alkyl phenyl ether sulfate or a salt thereof.

7. The positive electrified charge control agent according to claim 6,
wherein said alkyl sulfate, said poly(oxyethylene) alkyl ether sulfate and said poly(oxyethylene) alkyl phenyl ether sulfate have a straight- or a branch-chain alkyl group having 8 to 18 carbons.

8. A positive electrified toner for developing an electrostatic image comprising a positive electrified charge control agent comprising a silicon complex compound represented by the following chemical formula (1) 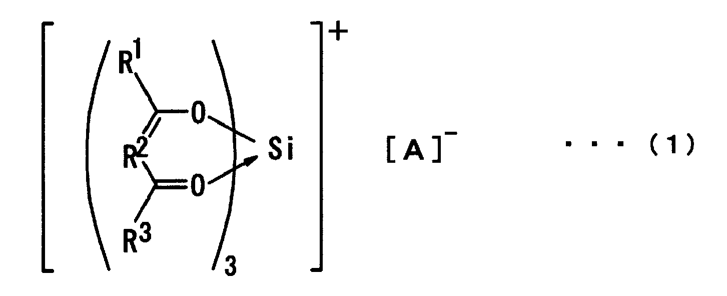 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion).

9. The positive electrified toner for developing an electrostatic image according to claim 8, wherein said silicon complex compound is represented by the following chemical formula (2) 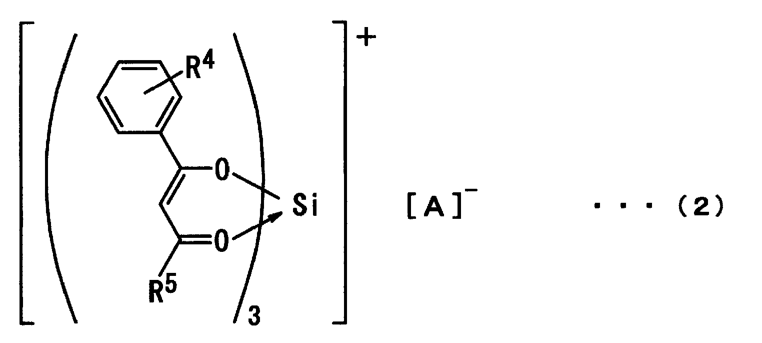 (in the formula (2), R⁴ has 1 to 8 carbons and is an alkyl group, an alkenyl group or an alkoxyl group; R⁵ has 1 to 8 carbons and is an alkyl group or an alkenyl group, or an aryl group having no substitutional group or having substitutional groups illustrated with an alkyl group having 1 to 8 carbons, an alkenyl group having 1 to 8 carbons and an alkoxyl group having 1 to 8 carbons; [A]⁻ is the same above).

10. The positive electrified toner for developing an electrostatic image according to claim 9, wherein R⁴ is an alkyl group having 1 to 8 carbons; R⁵ is an isopropyl group, a tert-butyl group, an isobutyl group, a tert-octyl group or an aryl group having no substitutional group or having substitutional groups illustrated with an alkyl group having 1 to 8 carbons and an alkoxyl group having 1 to 8 carbons in the formula (2).

11. The positive electrified toner for developing an electrostatic image according to claim 9, wherein said silicon complex compound represented by the chemical formula (2) is a compound obtained by a reaction of a sulfate anion type organic compound with a beta-diketone silicon compound represented by the following chemical formula (3) 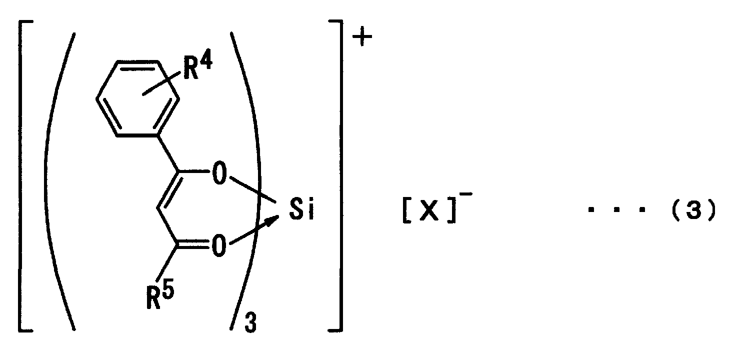 (in the formula (3), R⁴ and R⁵ are the same above, X is a halogen atom).

12. The positive electrified toner for developing an electrostatic image according to claim 11, wherein a content of allowable residual halogen derived from the beta-diketone silicon compound represented by the chemical formula (3) is at most 0.2%.

13. The positive electrified toner for developing an electrostatic image according to claim 11, wherein said sulfate anion type organic compound is an alkyl sulfate or a salt thereof, a poly(oxyethylene) alkyl ether sulfate or a salt thereof, or a poly(oxyethylene) alkyl phenyl ether sulfate or a salt thereof.

14. The positive electrified toner for developing an electrostatic image according to claim 13, wherein said alkyl sulfate, said poly(oxyethylene) alkyl ether sulfate and said poly(oxyethylene) alkyl phenyl ether sulfate have a straight- or a branch-chain alkyl group having 8 to 18 carbons.

15. The positive electrified toner for developing an electrostatic image according to claim 8, wherein 0.1 to 10 parts by weight of the positive electrified charge control agent and 100 parts by weight of a resin for the toner are included.

16. A charge control method of the positive electrified toner for developing the electrostatic image comprising a step for making the toner positively electrified by friction,
wherein the toner includes a component of the positive electrified charge control agent comprising a silicon complex compound represented by the following chemical formula (1) 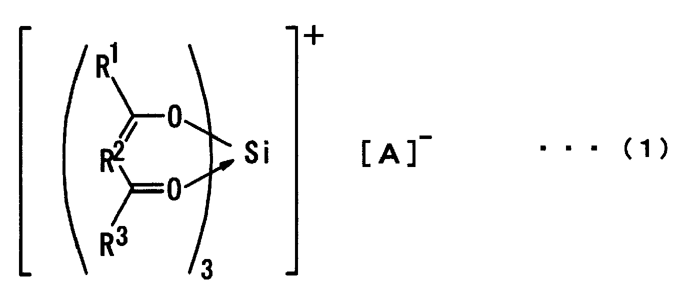 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion).

17. A charge-giving composition comprising a positive electrified charge control agent comprising a silicon complex compound represented by the following chemical formula (1) 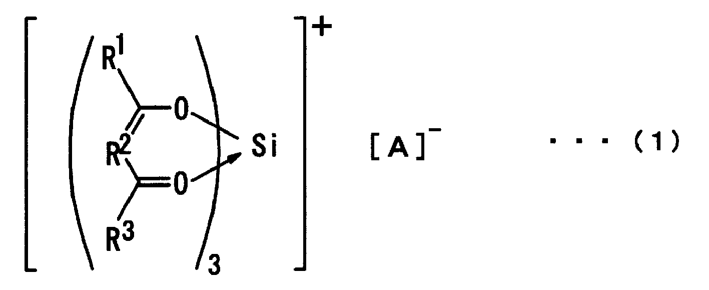 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion); and a solvent and/or a dispersant.

18. The charge-giving composition according to claim 17, wherein said silicon complex compound is represented by the following chemical formula (2) 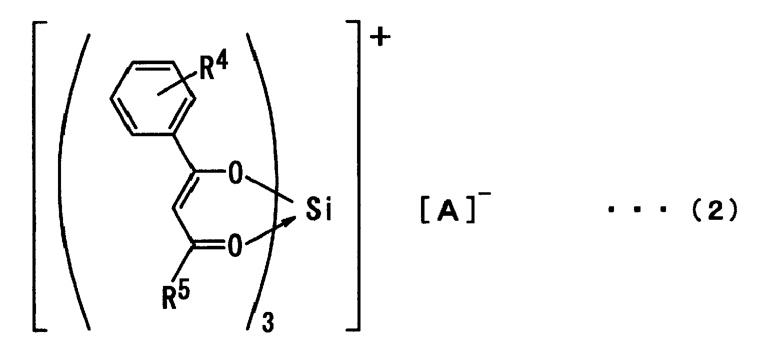 (in the formula (2), R⁴ has 1 to 8 carbons and is an alkyl group, an alkenyl group or an alkoxyl group; R⁵ has 1 to 8 carbons and is an alkyl group or an alkenyl group, or an aryl group having no substitutional group or having substitutional groups illustrated with an alkyl group having 1 to 8 carbons, an alkenyl group having 1 to 8 carbons and an alkoxyl group having 1 to 8 carbons; [A]⁻ is the same above).

19. A charge-giving component comprising at least one selected from a carrier powder, a developing sleeve and a blade which give a charge by contacting to a toner for an electrostatic photography,
wherein at least one thereof is coated with or formed by the charge-giving composition comprising a positive electrified charge control agent comprising a silicon complex compound represented by the following chemical formula (1) 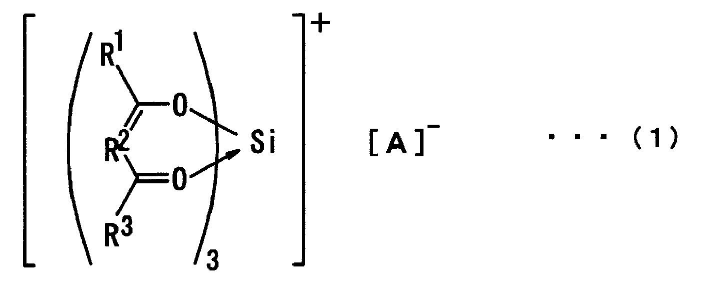 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion); and a solvent and/or a dispersant, and the silicon complex compound is exposed.

20. The charge-giving component according to claim 19, wherein said silicon complex compound is represented by the following chemical formula (2) 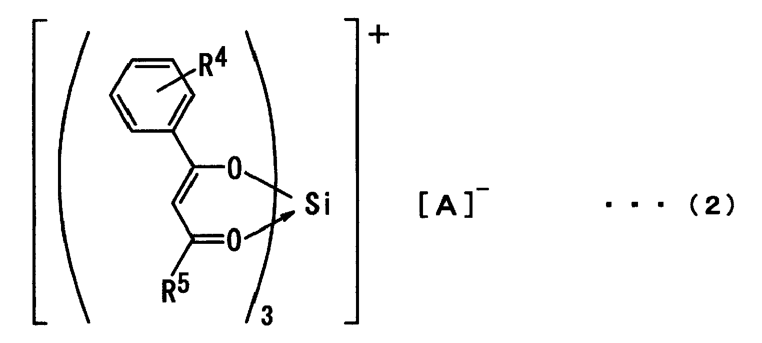 (in the formula (2), R⁴ has 1 to 8 carbons and is an alkyl group, an alkenyl group or an alkoxyl group; R⁵ has 1 to 8 carbons and is an alkyl group or an alkenyl group, or an aryl group having no substitutional group or having substitutional groups illustrated with an alkyl group having 1 to 8 carbons, an alkenyl group having 1 to 8 carbons and an alkoxyl group having 1 to 8 carbons; [A]⁻ is the same above).

21. A charge control method of a toner for an electrostatic photography comprising a step for making the toner positively electrified by contact and friction between the toner for an electrostatic photography and a charge-giving component comprising at least one selected from a carrier powder, a developing sleeve and a blade which give a charge by contacting to a toner for an electrostatic photography,
wherein at least one thereof is coated with or formed by the charge-giving composition comprising a positive electrified charge control agent comprising a silicon complex compound represented by the following chemical formula (1) 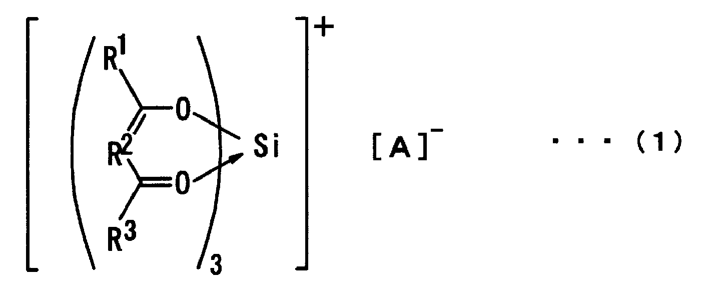 (in the formula (1), R¹ and R³ are same or different to each other and one thereof is selected from the groups consisting of a hydrogen atom, a hydroxyl group, a hydroxyalkyl group, a carboxyl group, an alkoxycarbonyl group, a formyl group, a halogen atom, an alkyl group, an alkoxyl group, an acyl group, an alkenyl group, a nitro group, a cyano group, an amino group, an alicyclic group being to have substitutional groups, an aralkyl group being to have substitutional groups and an aryl group being to have substitutional groups; R² is a nitrogen atom or a carbon atom being to have substitutional groups; [A]⁻ is a sulfate anion); and a solvent and/or a dispersant, and the silicon complex compound is exposed.
